# FASCICULE DE BREVET EUROPEEN

(11) **EP 4 448 468 B1**
(45) Date de publication et mention de la délivrance du brevet: **08.10.2025**
(21) Numéro de dépôt: 22846901.1
(22) Date de dépôt: 15.12.2022
(51) Int. Cl.: C04B 35/10, C04B 35/14, C04B 35/185, C04B 35/195, C04B 35/462, C04B 35/478, C04B 35/48, C04B 35/565, C04B 38/00, C04B 38/10

(54) **MOUSSE CÉRAMIQUE À DISPERSION DE TAILLE DE CELLULES RÉDUITE**
KERAMISCHER SCHAUM MIT EINER DISPERSION VON REDUZIERTEN ZELLEN
CERAMIC FOAM WITH REDUCED CELL SIZE DISPERSION

(30) Priorité: 17.12.2021 FR 2113798
(43) Date de publication de la demande: 23.10.2024
(73) Titulaire: SAINT-GOBAIN CENTRE DE RECHERCHES ET D'ETUDES EUROPEEN, 92400 Courbevoie (FR)
(72) Inventeur: VINCENT, Adrien, 13750 PLAN D'ORGON (FR); RAFFIN, Nicolas, 84250 LE THOR (FR)
(74) Mandataire: Ipsilon
(86) Numéro de dépôt international: PCT/EP2022/086149
(87) Numéro de publication internationale: WO 2023/111178

(56) Documents cités:
- EP-A1- 1 329 439
- EP-B1- 3 074 365
- WO-A1-2019/057729
- CN-U- 208 372 949
- DE-B3- 102015 202 277
- FR-A1- 2 873 685
- GREGOROVA E ET AL: "Porous alumina ceramics prepared with wheat flour", JOURNAL OF THE EUROPEAN CERAMIC SOCIETY, ELSEVIER, AMSTERDAM, NL, vol. 30, no. 14, 1 October 2010 (2010-10-01), pages 2871 - 2880, XP027189245, ISSN: 0955-2219, [retrieved on 20100731]
- HUANG KEKE ET AL: "Preparation and properties of alumina foams via thermally induced foaming of moltend-glucose monohydrate", JOURNAL OF POROUS MATERIALS, SPRINGER US, NEW YORK, vol. 24, no. 1, 12 July 2016 (2016-07-12), pages 121 - 128, XP036129452, ISSN: 1380-2224, [retrieved on 20160712], DOI: 10.1007/S10934-016-0244-6

## Description

### Domaine technique

La présente invention se rapporte à une mousse céramique frittée, destinée à filtrer un fluide, notamment pour décontaminer de l'air, notamment de l'air d'espaces clos habitables (habitations, bureaux, habitacles de véhicules, ...). Elle concerne également un procédé de fabrication d'une telle mousse.

### Technique antérieure

GREGOROVA E ET AL: "Porous alumina ceramics prepared with wheat flour",JOURNAL OF THE EUROPEAN CERAMIC SOCIETY, ELSEVIER, AMSTERDAM, NL, vol. 30, no. 14, 1 octobre 2010 (2010-10-01), pages 2871-2880 divulgue une mousse céramique poreuse.

Il existe plusieurs procédés de fabrication permettant d'obtenir des mousses céramiques poreuses.

Le plus simple de ces procédés comprend l'addition d'un agent porogène dans une barbotine céramique ou un mélange à presser. Le tout est mis en forme puis subit un cycle de cuisson qui permet de brûler l'agent porogène. En brûlant, l'agent porogène laisse place à une porosité. Ce procédé est décrit par exemple dans le brevet EP 1 140 731 B1. Il présente l'inconvénient de conduire à un dégagement gazeux (éventuellement toxique) dû à la pyrolyse de l'agent porogène. Par ailleurs, il est difficile de fabriquer des pièces épaisses, car le dégagement gazeux est alors difficile à effectuer (il faut pouvoir évacuer le gaz de manière homogène).

Un autre procédé comprend la réplication d'une mousse en polymère, polyuréthane par exemple. Cette mousse est recouverte d'une barbotine céramique. Le tout subit ensuite un cycle de cuisson qui permet de brûler la mousse polyuréthane et de fritter la mousse céramique dont la structure est induite par la mousse polyuréthane de départ. Ce procédé est décrit par exemple dans le brevet US 4,024,212. On retrouve les inconvénients liés au dégagement gazeux (en brûlant, le polyuréthane dégage des gaz à liaison C-N qui sont dangereux). Par ailleurs, il est difficile de réaliser des pièces avec des pores de dimensions inférieures à 200 µm.

Un procédé alternatif comprend la création de porosités par la formation de gaz par réaction chimique entre différents additifs d'une barbotine de céramique. Ce procédé est décrit par exemple dans les brevets US 5,643,512 ou US 5,705,448. On retrouve les inconvénients liés au dégagement de gaz décrits ci-dessus.

Un dernier procédé consiste à introduire mécaniquement un gaz dans une barbotine par brassage.

Il existe plusieurs méthodes de consolidation des mousses obtenues. Une méthode consiste à mélanger des monomères polymérisables à la barbotine céramique. Dans des conditions particulières, la polymérisation des monomères entraîne la consolidation de la mousse. Cette méthode est décrite par exemple dans le brevet EP 759 020 B1 et dans le brevet EP 330 963. Le coût élevé des monomères et des agents de réticulation utilisables ainsi que la difficulté à maîtriser les conditions de polymérisation ont empêché cette méthode de se développer de manière industrielle.

Un procédé de fabrication de céramiques poreuses plus récent est décrit dans la demande de brevet EP 1 329 439 A1. Ce procédé comporte les étapes suivantes :
1) préparation d'une suspension d'une poudre céramique dans un dispersant,
2) préparation d'une solution contenant un biogel, encore appelé " hydrocolloïde ", et maintien à une température supérieure à la température de gélification de la solution,
3) mélange de ladite suspension et de ladite solution, avec ajout d'un agent moussant, jusqu'à obtention d'une mousse, la température étant maintenue suffisamment élevée pour éviter la gélification du biogel,
4) coulage de la mousse dans un moule,
5) refroidissement jusqu'à gélification du biogel,
6) séchage puis cuisson de la mousse obtenue.

L'utilisation d'un biogel pour consolider la mousse permet d'éviter les problèmes de toxicité évoqués précédemment. Cependant, il s'avère que si la mousse coulée dans le moule a une épaisseur supérieure à 60 mm, la mousse n'a pas une structure homogène. De plus, selon ce procédé, la quantité d'eau dans le mélange final est importante (45 à 50% en poids), ce qui entraîne des difficultés de séchage, en particulier pour une mousse présentant une épaisseur supérieure à 60 mm. Il n'est donc pas possible de fabriquer des pièces céramiques poreuses de structure homogène et présentant de grandes dimensions.

La demande de brevet français déposée par la Société Saint-Gobain Centre de Recherches et d'Etudes Européen sous le numéro FR 0408330 décrit un procédé amélioré permettant de fabriquer des pièces en mousse céramique, de densité homogène, ayant des dimensions supérieures ou égales à 60 mm. A cet effet, FR 0408330 propose un procédé de fabrication d'une mousse céramique comprenant les étapes successives suivantes :
a) préparation d'un mélange contenant une poudre céramique en suspension, au moins un agent gélifiant et au moins un agent moussant, à une température de mélange supérieure à la température de gélification dudit agent gélifiant,
b) cisaillement dudit mélange à une température de moussage supérieure à ladite température de gélification, jusqu'à obtention d'une mousse,
c) gélification de ladite mousse par refroidissement dudit mélange à une température inférieure à la température de gélification dudit agent gélifiant,
d) séchage de ladite mousse gélifiée de manière à obtenir une préforme,
e) cuisson par traitement à haute température de ladite préforme de manière à obtenir une mousse céramique cuite.

Selon ce procédé, on ajoute audit mélange un agent stabilisant dont la viscosité instantanée, en Pa.s, augmente d'au moins un facteur dix quand une vitesse de cisaillement dudit agent stabilisant diminue de 100 s⁻¹ à 0 s⁻¹. Les inventeurs de l'invention décrite dans FR 0408330 ont observé que l'affaissement de la mousse lors de la mise en œuvre du procédé selon EP 1 329 439 A1 se produit pendant une période critique s'étendant entre la fin de l'étape de cisaillement et le début de la gélification. Pendant cette période, l'agent gélifiant ne contribue sensiblement pas à la stabilisation structurelle de la mousse qui, pour des épaisseurs de plus de 60 mm, s'effondre sous son propre poids. Etant parvenus à identifier la cause de l'affaissement, ils ont proposé d'ajouter un agent stabilisant dans le mélange. L'agent stabilisant est choisi pour sa capacité à augmenter considérablement la viscosité du mélange dès que le cisaillement du mélange cesse, ce qui permet de rigidifier suffisamment la mousse pour éviter son effondrement jusqu'à ce que l'agent gélifiant se gélifie et puisse exercer sa fonction de stabilisation. Il devient ainsi possible de fabriquer des pièces en mousse céramique, de densité homogène, ayant des dimensions supérieures ou égales à 60 mm et/ou présentant des formes complexes (cône ou cylindre creux, portion de sphère creuse, ...).

EP 1 778 601 A1 vient encore améliorer ce procédé en ce que le mélange comporte du carbure de silicium et optionnellement un agent plastifiant, la cuisson étant effectuée dans des conditions permettant une consolidation par un mécanisme d'évaporationrecristallisation dudit carbure de silicium.

Le procédé par moussage direct et gélification est particulièrement adapté à la réalisation de pièces de grandes dimensions.

Cependant, il existe un besoin permanent pour améliorer le compromis entre la perte de charge et l'efficacité de filtration, en conservant une bonne résistance mécanique.

Un but de l'invention est de répondre, au moins partiellement, à ce besoin.

### Exposé de l'invention

L'invention propose une mousse céramique présentant une pluralité de cellules imbriquées, délimitées par des parois céramiques et connectées entre elles par des fenêtres d'interconnexion, les parois délimitant les cellules étant formées par frittage de grains, des interstices subsistant entre les grains,
la mousse céramique présentant une porosité totale (ouverte et fermée), incluant la porosité intergranulaire, c'est-à-dire la porosité constituée des pores « intergranulaires » dans les parois délimitant les cellules, et la porosité d'interconnexion, c'est-à-dire la porosité définie par les « pores d'interconnexion » résultant des fenêtres d'interconnexion entre les cellules supérieure à 40%, de préférence supérieure à 50%, de préférence supérieure à 55%, de préférence supérieure à 60%, de préférence supérieure à 65%, voire supérieure à 70% et de préférence inférieure à 90%, de préférence inférieure à 85%, de préférence inférieure à 80%, de préférence inférieure à 75%,
le rapport (d₉₀-d₁₀) /d₅₀ étant inférieur à 0,15, de préférence inférieur à 0,13, de préférence inférieur à 0,12,
les percentiles d₁₀, d₅₀ et d₉₀ de la population de tailles de cellule étant les tailles de cellule correspondant respectivement aux pourcentages, en nombre, de 10%, 50%, 90% sur la courbe de distribution cumulée de tailles de cellule classées par ordre croissant,
la taille d'une cellule étant le diamètre équivalent de la cellule sur une image d'une coupe de la mousse céramique.

Les inventeurs ont découvert que cette distribution étroite de tailles de cellule conduit à un meilleur compromis entre la perte de charge et l'efficacité de filtration, en comparaison avec une autre mousse de porosité totale similaire, tout en conservant une bonne résistance mécanique.

De préférence, la mousse céramique présente encore une ou plusieurs des caractéristiques suivantes :
- le percentile d₁₀, en pourcentage en nombre sur ladite courbe de distribution cumulée des tailles de cellule classées par ordre croissant, est supérieur à 240 micromètres, de préférence supérieur à 250 micromètres, et/ou inférieur à 310 micromètres, de préférence inférieur à 300 micromètres, de préférence inférieur à 290 micromètres, ce qui avantageusement réduit la perte de charge, d₁₀ étant de préférence compris entre 260 et 285 micromètres ;
- le percentile d₉₀, en pourcentage en nombre sur ladite courbe de distribution cumulée des tailles de cellule classées par ordre croissant, est inférieur à 350 micromètres, de préférence inférieur à 340 micromètres, et/ou supérieur à 250 micromètres, de préférence supérieur à 260 micromètres, de préférence supérieur à 270 micromètres, ce qui avantageusement augmente l'efficacité de filtration, d₉₀ étant de préférence compris entre 280 et 330 micromètres ;
- le percentile d₅₀, en pourcentage en nombre sur ladite courbe de distribution cumulée des tailles de cellule classées par ordre croissant, est inférieur à 340 micromètres, de préférence inférieur à 330 micromètres, de préférence inférieur à 300 micromètres et/ou supérieur à 250 micromètres, de préférence supérieur à 260 micromètres, de préférence compris entre 265 et 315 micromètres ;
- la taille maximale de cellules, ou percentile d₁₀₀, en pourcentage en nombre sur ladite courbe de distribution cumulée des tailles de cellule classées par ordre croissant, est inférieure à 975 micromètres, de préférence inférieure ou égale à 850 micromètres ;
- la mousse céramique est constituée, pour plus de 80%, plus de 90%, plus de 95%, plus de 99%, de préférence sensiblement 100% de sa masse, en un matériau céramique, de préférence en carbure de silicium ou en cordiérite ou en titanate d'aluminium ou en zircone ou en alumine ou en mullite ou en silice, ou en un mélange de ces matériaux, de préférence en carbure de silicium, de préférence en carbure de silicium recristallisé ;
- la mousse céramique est constituée, pour plus de 80%, plus de 90%, plus de 95%, plus de 99%, de préférence sensiblement 100% de sa masse en un matériau céramique non oxyde ;
- la mousse céramique comporte plus de 80% en masse de carbure de silicium recristallisé, la porosité intergranulaire étant de préférence supérieure ou égale à 5 % et inférieure à 25%, de préférence supérieure ou égale à 10 % et inférieure à 20% ;
- la taille médiane des pores (incluant les pores intergranulaires et les pores d'interconnexion) (D₅₀ en volume, mesuré par porosimétrie mercure) est supérieure à 1 µm, voire supérieure à 5 µm, supérieure à 7 µm, voire supérieure à 10 µm, de préférence supérieure à 20 µm, de préférence supérieure à 30 µm, de préférence supérieure à 40 µm, de préférence supérieure à 50 µm, de préférence supérieure à 60 µm, de préférence supérieure à 70 µm et/ou inférieure à 170 µm, de préférence inférieure à 160 µm, de préférence inférieure à 150 µm, de préférence inférieure à 145 µm, inférieure à 140 µm, inférieure à 130 µm, de préférence inférieure à 120 µm ;
- le percentile D₁₀ en volume sur la courbe de distribution cumulée des tailles de pores (incluant les pores intergranulaires et les pores d'interconnexion) classées par ordre croissant, mesurée par porosimétrie mercure, est de préférence supérieur à 5 µm, de préférence supérieur à 8 µm ;
- de préférence, la différence D₉₀-D₁₀ est inférieure à 250 µm, voire inférieure à 200 µm, voire inférieure à 180 µm et/ou supérieure à 40 µm, voire supérieure à 50 µm ;
- la mousse céramique présente une distribution de la taille des pores, mesurée avec un porosimètre au mercure, qui est bimodale et qui comporte des premier et deuxièmes pics principaux centrés sur des première et deuxième tailles de pore de préférence comprises entre 4 et 30 µm et entre 40 et 180 µm, respectivement, la porosité intergranulaire, représentée par le premier pic, étant de préférence supérieure ou égale à 5 % et inférieure à 25% ;
- ladite deuxième taille de pore, représentant celle des pores d'interconnexion, est supérieure à 50 µm et/ou inférieure à 160 µm ;
- ladite première taille de pore est supérieure à 7 µm et/ou inférieure à 25 µm,
   ou inférieure ou égale à 20 µm ;
- la tortuosité est supérieure à 1 et inférieure à 2, voire inférieure à 1,9, voire inférieure à 1,8, voire inférieure à 1,7, voire inférieure à 1,6, de préférence inférieure à 1,5, de préférence inférieur à 1,3, de préférence inférieur à 1,2 ;
- la mousse céramique comporte une couche superficielle présentant une porosité totale inférieure à 0,95 fois la porosité totale au centre de la mousse céramique, les pores de la couche superficielle présentant de préférence une taille médiane supérieure à 1 µm et inférieure à 20 µm, la porosité totale dans la couche superficielle étant de préférence supérieure à 30% et inférieure à 70%, l'épaisseur de la couche superficielle étant de préférence comprise entre 5 et 500 µm ;
- l'ensemble des grains présente de préférence un rapport de forme moyen, en moyenne sur l'ensemble des grains, inférieur 2, de préférence inférieur à 1,5, le rapport de forme étant classiquement le rapport L/l où L désigne la longueur du grain, c'est-à-dire sa plus grande dimension, et 1 désigne la largeur du grain, c'est-à-dire sa plus grande dimension dans un plan transversal quelconque perpendiculaire à la direction de la longueur ;
- la mousse céramique présente une épaisseur supérieure à 1mm, voire supérieure à 2 mm, ou même supérieure ou égale à 3 mm et/ou inférieure à 300 mm, de préférence inférieure à 100 mm, de préférence inférieure à 80 mm, de préférence inférieure à 60 mm, voire inférieure à 50 mm, ou même inférieure à 30 mm. Dans un mode de réalisation, la mousse présente des faces amont et aval par lesquelles, dans une position de service du dispositif, un fluide entre et sort de ladite mousse, le rapport de l'épaisseur moyenne mesurée entre lesdites faces amont et aval divisé par la surface moyenne desdites faces amont et aval étant supérieur à 0,2 mm/100 cm².

L'invention concerne aussi un procédé de fabrication d'une mousse céramique, et en particulier d'une mousse céramique selon l'invention, ledit procédé comprenant les étapes successives suivantes :
a) préparation d'un mélange M contenant au moins une poudre céramique en suspension dans de l'eau, au moins un agent gélifiant et au moins un agent moussant, à une température de mélange supérieure à la température de gélification dudit agent gélifiant,
b) cisaillement dudit mélange M dans un malaxeur mousseur équipé d'au moins une pale perforée, à une température de moussage supérieure à ladite température de gélification, jusqu'à obtention d'une mousse intermédiaire,
c) gélification de ladite mousse intermédiaire par refroidissement de ladite mousse intermédiaire à une température au moins deux fois, de préférence au moins trois fois, de manière plus préférée au moins cinq fois plus faible que la température de gélification de l'agent gélifiant, en °C,
d) séchage de ladite mousse gélifiée de manière à obtenir une préforme dont l'humidité après séchage est de préférence inférieure à 1%,
e) cuisson de ladite préforme à haute température, de préférence supérieure à 1300°C et inférieure à 2300°C. Le procédé selon l'invention présente:
   - la concentration surfacique en dites ouvertures mesurée dans une fraction radiale d'extrémité (F1) s'étendant, à partir d'une extrémité libre de la pale opposée à l'axe de rotation (X) de la pale, sur 30% de la largeur de ladite face, étant supérieure à - la concentration surfacique en dites ouvertures mesurée dans une fraction radiale centrale (F1') s'étendant, à partir de l'axe de rotation (X) de la pale, sur 30% de la largeur de ladite face, la largeur étant mesurée perpendiculairement à l'axe de rotation.

Un procédé selon l'invention permet avantageusement la fabrication d'une mousse présentant une structure particulièrement bien adaptée à la filtration. Cette structure se caractérise en particulier par une distribution resserrée de la taille des fenêtres d'interconnexion entre les cellules, avec une quantité de pores de grandes tailles limitée. Ce procédé permet également une stabilisation structurelle de la mousse intermédiaire sans avoir à recourir à un agent stabilisant. Cette stabilisation permet un bon contrôle de la porosité, mais aussi la fabrication d'une mousse céramique de grande épaisseur, sans affaissement, de manière industrielle.

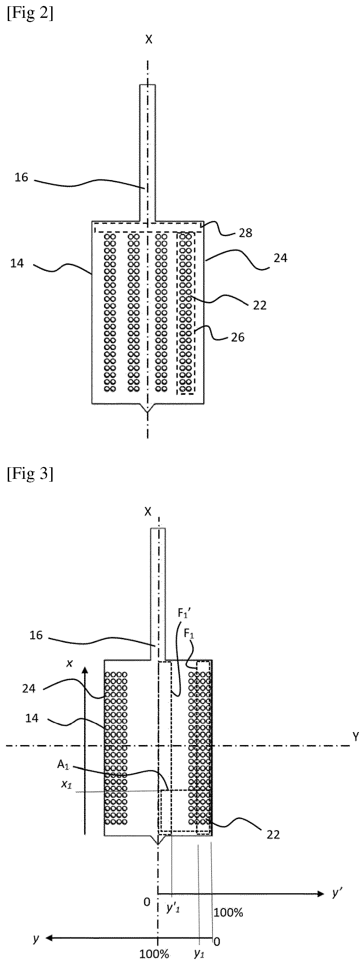

De préférence, le procédé selon l'invention présente encore une ou plusieurs des caractéristiques suivantes :
- la pale comporte une pluralité de perforations traversant la pale, de préférence suivant la direction de son épaisseur, chaque perforation débouchant par des première et deuxième ouvertures sur des première et deuxième faces opposées de la pale, respectivement ;
- le rapport desdites concentrations surfaciques est supérieur à 1,05, de préférence supérieur à 1,1, de préférence supérieur à 5, de préférence supérieur à 10, de préférence supérieur à 20, de préférence supérieur à 50, de préférence supérieur à 100, voire étant infini si ladite fraction radiale centrale est dépourvue d'ouvertures ;
- lesdites ouvertures débouchant sur une face de la pale sont régulièrement réparties dans au moins une zone perforée et/ou présentent chacune un diamètre équivalent compris 2 et 20 mm et/ou ont une surface cumulée supérieure à 10%, et de préférence inférieure à 80% de la surface de ladite face ;
- sur une fraction radiale « d'extrémité » d'une face de la pale s'étendant à partir de l'extrémité libre de la dite pale en direction de l'axe X de rotation jusqu'à une position radiale (*y* sur la figure 3) de 30% de la largeur de la pale (*y₁* sur la figure 3), le pourcentage cumulé de la surface des ouvertures débouchant dans ladite fraction radiale sur la base de la surface de pale (y compris des ouvertures) dans ladite fraction radiale est supérieur à 30% ;
- sur une fraction radiale « d'extrémité » d'une face de la pale s'étendant à partir de l'extrémité libre de la dite pale en direction de l'axe X de rotation jusqu'à une position radiale (*y* sur la figure 3) de 30% de la largeur de la pale (*y* = *y₁* = 30%), le pourcentage cumulé de la surface des ouvertures débouchant dans ladite fraction radiale sur la base de la surface de ladite fraction radiale (y compris des ouvertures), c'est-à-dire la concentration surfacique en ouvertures dans ladite fraction radiale, est supérieur au pourcentage cumulé de la surface des ouvertures sur toute la surface de la face sur la base de la surface de ladite face, c'est-à-dire à la concentration surfacique en ouvertures dans toute la face ; autrement dit, la concentration surfacique en ouvertures est plus grande en périphérie de la face qu'en moyenne sur la face ;
- de préférence, le rapport de la concentration surfacique en ouvertures dans ladite fraction radiale d'extrémité sur la concentration surfacique en ouvertures en moyenne sur la face est supérieur à 1,5 et/ou inférieur à 50, de préférence inférieur à 20, de préférence inférieur à 10, de préférence inférieur à 5, de préférence inférieur à 3;
- une ou chacune des deux caractéristiques optionnelles qui précèdent s'appliquent pour toute fraction radiale d'extrémité s'étendant à partir de l'extrémité libre de la dite pale en direction de l'axe X de rotation jusqu'à une position radiale inférieure à 30% de la largeur de la pale (c'est-à-dire pour toute valeur de y inférieure à 30%) ;
- sur une fraction radiale centrale d'une face de la pale s'étendant à partir de l'axe X de rotation jusqu'à une position radiale (*y'* sur la figure 3) de 30% ((*y'* = *y₁*' sur la figure 3), de préférence de 50% de la largeur de la pale, le pourcentage cumulé de la surface des ouvertures débouchant dans ladite fraction radiale sur la base de la surface de la fraction radiale (y compris la surface des ouvertures) est inférieur à 50%, de préférence inférieur à 30%, c'est-à-dire que la concentration surfacique en ouvertures est relativement faible à l'approche de l'axe X ;
- le pourcentage total de la surface des ouvertures d'une face de la pale sur la surface totale de ladite face (y compris la surface des ouvertures) est supérieur à 10%, et de préférence inférieur à 80%, de préférence inférieur à 70%, de préférence inférieur à 60%, de manière préférée compris entre 15% et 50% ;
- le diamètre équivalent des ouvertures des perforations de la pale, de préférence circulaires, est compris 2 et 20 mm, de préférence entre 4 et 15 mm, de manière plus préférée entre 5 et 12 mm ;
- la vitesse de refroidissement à l'étape c) est supérieure à 20°C/minute, de préférence supérieure à 30°C/minute ;
- de préférence le refroidissement est une trempe, c'est à dire que la mousse intermédiaire est soumise directement à la température inférieure à une température au moins deux fois, de préférence au moins trois fois, de manière plus préférée au moins cinq fois plus faible que la température de gélification de l'agent gélifiant, en °C ;
- la vitesse de refroidissement à l'étape c) est déterminée de manière qu'en moins de 30 minutes, de préférence en moins de 15 minutes, la température au cœur de la mousse intermédiaire soit inférieure à 0,5 fois la température de gélification, de préférence inférieure à 0,2 fois la température de gélification du gélifiant ;
- la gélification à l'étape c) est de préférence réalisée dans une étuve climatique utilisée à l'étape d) pour le séchage, ou la mousse gélifiée issue de l'étape c), encore sensiblement à la température mise en œuvre à l'étape c), est disposée dans une étuve climatique utilisée à l'étape d) pour le séchage ;
- à l'étape d), la mousse gélifiée issue de l'étape c) est de préférence au moins en partie séchée à humidité et température contrôlées ;
- de préférence, l'étape d) comporte une opération de séchage par augmentation progressive de la température, en contrôlant l'humidité de l'environnement de la mousse gélifiée ;
- à l'étape d), la mousse gélifiée issue de l'étape c) est de préférence séchée dans une étuve climatique sous ventilation forcée, de préférence pendant une durée supérieure à 1 heure, de préférence supérieure à 24 h, à 48 h, à 72 h, à 96 h, à 120 h, et/ou inférieure à 1 semaine, la température dans l'étuve climatique étant de préférence progressivement augmentée pendant l'étape d), de préférence par palier, tout étant maintenue inférieure à la température de gélification ;
- à l'étape d), en complément ou alternativement à un séchage dans une étuve climatique, la mousse gélifiée issue de l'étape c) est séchée par voie supercritique, de préférence en autoclave,
   - à une température supérieure à la température critique de la phase liquide du mélange M, formée par l'eau, l'agent gélifiant, l'agent moussant, et les autres additifs de moussage éventuels, et
   - à une pression inférieure à la pression critique de ladite phase liquide ; de préférence sous vide,
- préalablement au séchage par voie supercritique, la mousse gélifiée issue de l'étape c) est de préférence surgelée ou congelée ;
- à l'étape d), le séchage en étuve climatique et/ou par voie supercritique est de préférence poursuivi jusqu'à ce que l'humidité résiduelle de la mousse gélifiée atteigne une valeur intermédiaire, de préférence supérieure à 70% de l'humidité initiale et/ou inférieure à 95%, de préférence inférieure à 90% de l'humidité initiale. De préférence, le séchage est poursuivi jusqu'à ce que l'humidité résiduelle de la mousse gélifiée soit inférieure à 10%, de préférence inférieure à 5%, et/ou supérieure à 2%, de préférence supérieure à 3% ou à 4%.et inférieure à 95%, de préférence inférieure à 90%. ; Ensuite, le séchage est de préférence poursuivi par chauffage, de préférence à une température supérieure à 40°C, jusqu'à ce que l'humidité résiduelle de la mousse gélifiée soit inférieure à 1% ;
- à l'étape e), la cuisson de la préforme est de préférence réalisée sous atmosphère non oxydante, de préférence sous argon, de préférence à une température supérieure à 1400°C.

Dans un mode de réalisation, à l'étape c), la mousse intermédiaire est soumise, de préférence au début de l'étape c), de préférence pendant plus de 10 h, de préférence plus de 20 h, et/ou moins de 72 h, de préférence moins de 48 h, de préférence moins de 30 h, à une température inférieure à 10°C, de préférence inférieure à 6°C.

Dans un mode de réalisation, et en particulier lorsque l'étape d) comporte un séchage par voie supercritique, la mousse intermédiaire est soumise, à l'étape c), de préférence au début de l'étape c), à une température inférieure à la température de solidification de la mousse intermédiaire, de préférence jusqu'à congélation complète de ladite mousse intermédiaire.

L'invention concerne encore l'utilisation d'une mousse céramique poreuse selon l'invention ou d'une mousse céramique fabriquée au moyen d'un procédé selon l'invention, pour des supports de catalyse, pour la filtration de liquides ou de gaz chauds, comme diffuseur (pièce chauffée laissant passer le mélange air/gaz nécessaire à la combustion) dans un brûleur à gaz, dans un récepteur volumétrique solaire, en anglais " solar volumetric receiver ", ou comme pièce de gazetterie (supports de cuisson).

L'invention concerne enfin un appareil de traitement de gaz, de préférence de l'air, en particulier de l'air à température ambiante (20°C), comportant :
- une mousse céramique selon l'invention ou fabriquée suivant un procédé selon l'invention,
- de préférence, un circulateur dudit gaz configuré pour générer un flux de gaz à traiter à travers ladite mousse céramique.

L'appareil de traitement peut être un appareil filtrant activement le gaz, par exemple un climatiseur ou un chauffage insufflant de l'air, en particulier un appareil électrique. Il comporte alors un circulateur d'air configuré pour générer un flux d'air à traiter à travers la mousse céramique.

L'appareil de traitement peut être aussi passif, et en particulier être un appareil disposé dans un lieu où il est soumis à un flux d'air à l'état naturel, par exemple placé dans les lieux publics, en particulier les gares de transport en commun.

De préférence, l'appareil de traitement comporte un détecteur de perte de charge à travers la mousse céramique, et une unité électronique, programmée pour déclencher ou informer sur la nécessité d'une opération de nettoyage et/ou de purification en fonction d'une information reçue du détecteur de perte de charge.

De préférence encore, il comporte un outil de nettoyage et/ou de purification, de préférence commandé par l'unité électronique en fonction de l'information reçue du détecteur de perte de charge. La maintenance en est considérablement simplifiée.

Dans un mode de réalisation, l'appareil de traitement comporte une mémoire informatique dans laquelle est enregistrée une information relative à la mousse céramique, de préférence un identifiant de la mousse céramique et/ou au moins une photo représentant, au moins partiellement, la mousse céramique à un instant déterminé, de préférence avant la première utilisation de la mousse céramique. Cette information peut être utilisée, de préférence par un ordinateur, pour la maintenance, par exemple pour évaluer la perte de charge ou l'âge de la mousse céramique.

Dans un mode de réalisation, l'appareil de traitement de gaz, en particulier de l'air, comprend un logement dans lequel est placée ladite mousse céramique, par exemple sous forme d'une cartouche.

La mousse comprend par exemple une face supérieure et une face inférieure opposée à ladite face supérieure délimitant l'épaisseur de ladite mousse céramique. Le gaz destiné à être traité arrive par la face supérieure de ladite mousse céramique, le gaz passe par les pores de la mousse, et le gaz traité ressort par la face inférieure de ladite mousse céramique. L'étanchéité entre ledit logement et ladite mousse céramique peut être assurée par un joint, de préférence un joint en élastomère, ledit joint formant un anneau autour de ladite mousse céramique et présentant de préférence une section transversale sensiblement en U, ajustée pour recouvrir toute l'épaisseur de ladite mousse céramique et recouvrir au moins partiellement lesdites faces supérieure et inférieure.

De manière générale, l'invention concerne un dispositif choisi parmi un support de catalyseur, un filtre pour la filtration de liquides ou de gaz chauds, de préférence à une température supérieure à 200°C, un diffuseur d'un brûleur à gaz, un récepteur volumétrique solaire, une pièce de gazetterie, notamment par exemple un support de déliantage, de préférence de déliantage d'un produit céramique, et un dit appareil de traitement de gaz, ledit dispositif comportant une mousse céramique selon l'invention.

### Brève description des figures

D'autres caractéristiques et avantages de l'invention apparaitront encore à l'examen de la description qui va suivre et au regard du dessin annexé, fourni à des fins illustratives seulement, dans lequel :
- [Fig 1] la figure 1 représente schématiquement un malaxeur mousseur utile pour la fabrication d'une mousse céramique selon l'invention ;
- [Fig 2] la figure 2 représente un ensemble de deux pales du malaxeur mousseur de l'exemple 1 comparatif ;
- [Fig 3] la figure 3 représente un ensemble de deux pales d'un malaxeur mousseur selon l'invention ;
- [Fig 4] la figure 4 représente la répartition comparée de la surface ouverte cumulée (surface cumulée des ouvertures des perforations sur une fraction d'une face d'une pale) en fonction de la fraction radiale centrale considérée, c'est-à-dire en fonction de la position relative sur le rayon des pales selon l'exemple 1 et l'exemple 3 depuis l'axe de rotation en direction de l'extrémité libre opposée, c'est-à-dire selon l'axe Oy');
- [Fig 5] la figure 5 représente la répartition des ouvertures d'une face, en fonction de la fraction axiale de la face sur laquelle elle débouche, c'est-à-dire depuis le bas jusqu'en haut de la pale parallèlement à l'axe de rotation X, selon l'exemple 3 et selon l'exemple 1, les deux courbes étant confondues ;
- [Fig 6] la figure 6 représente un exemple de mousse dans une application de filtration.

Sur les figures, des références identiques désignent des organes identiques ou différents.

### Définitions

Par « décontaminer », on entend désactiver, de préférence éliminer, un ou plusieurs agents pathogènes humains transmissibles par voie respiratoire et contenus dans l'air.

On qualifie de « céramique » tout matériau non métallique et non organique.

On appelle classiquement « frittage », la consolidation par traitement thermique d'une préforme, avec éventuellement une fusion, partielle ou totale, de certains de ses constituants (mais pas de tous ses constituants, de sorte que la préforme n'est pas transformée en une masse liquide).

Par « carbure de silicium recristallisé », on entend du carbure de silicium recristallisé par traitement à haute température de la mousse céramique, et en particulier de la mousse céramique. La recristallisation est un phénomène bien connu correspondant à une consolidation par évaporation des plus petits grains de carbure de silicium puis condensation pour former le lien avec les plus gros grains.

Une mousse selon l'invention est une structure formée d'un ensemble de cellules imbriquées, délimitées par des parois céramiques et connectées entre elles par des fenêtres d'interconnexion. Une mousse est en particulier décrite dans Myriam Laroussi. « Modélisation du comportement des mousses solides à porosité ouverte » : une appproche micromécanique. Mécanique [physics.med-ph]. Ecole des Ponts ParisTech, 2002. Elle se distingue d'une structure en nid d'abeilles par l'interconnexion des cellules, alors que les canaux d'une structure en nid d'abeilles sont généralement parallèles et non connectés entre eux. Les dimensions des canaux sont également beaucoup plus grandes que celles des cellules. Typiquement, les cellules, de forme générale sphérique, présentent un diamètre équivalent compris entre 50 µm et 300 µm alors que le diamètre équivalent de la section transversale des canaux d'une structure à nid d'abeilles est classiquement supérieur à 1 mm, notamment pour la filtration de gaz d'échappement de véhicules automobiles. La longueur des canaux est classiquement de plusieurs centimètres.

Une mousse présente avantageusement une grande surface spécifique et une perméabilité élevée.

Par « diamètre équivalent » d'une cellule ou d'une section transversale, on entend le diamètre d'une sphère de même volume que ladite cellule ou d'un disque de même surface que ladite section transversale, respectivement.

Sauf indication contraire, le terme « pores » fait référence à l'ensemble des pores, c'est-à-dire des pores d'interconnexion et intergranulaires.

La taille des pores peut être par exemple déterminée à l'aide d'un porosimètre au mercure.

En application de la loi de Washburn mentionnée dans la norme ISO 15901-1.2005 part 1 un porosimètre à mercure permet ainsi d'établir une distribution de tailles des pores en volume, c'est-à-dire de déterminer, pour chaque taille de pore, un volume occupé par les pores présentant cette taille.

Une distribution bimodale de tailles de pore comporte deux pics principaux, c'est-à-dire qui présentent les sommets les plus élevés.

Dans une mousse céramique fabriquée selon EP 1 778 601 comme dans une mousse selon l'invention, une analyse à l'aide d'un porosimètre au mercure permet de mettre en évidence une répartition de la taille des pores bimodale, c'est-à-dire présentant des premier et deuxième pics principaux distincts. Ces pics sont représentatifs des deux familles de pores, à savoir les pores intergranulaires, c'est-à-dire les interstices entre les grains agglomérés par frittage, et les pores d'interconnexion. On considère que la taille médiane des pores de chacune des familles est donnée par la taille de pore correspondant au sommet de chaque pic.

La distribution de la taille des pores peut être également représentée de manière cumulée, les tailles de pore étant classées par ordre croissant. A chaque taille de pore est ainsi associé un percentile qui correspond, sur la courbe de distribution cumulée, au pourcentage du volume de la porosité totale qui est constitué par des pores ayant une taille inférieure à ladite taille. Par exemple, 10%, en volume, des pores ont une taille inférieure au percentile 10 et 90% des pores, en volume, ont une taille supérieure ou égale à ce percentile.

Les percentiles D₁₀, D₅₀ et D₉₀ de la population de pores sont donc les tailles de pore correspondant respectivement aux pourcentages de 10%, 50%, 90% sur la courbe de distribution cumulée de distribution de tailles de pores classées par ordre croissant.

Le percentile 50 est la taille médiane d'une population de pores. Cette taille partage, en volume, ladite population en deux groupes : un groupe représentant 50% du volume poreux et dont les pores présentent une taille inférieure à la taille médiane et un autre groupe représentant 50% du volume poreux et dont les pores présentent une taille supérieure ou égale à ladite taille médiane.

La porosité totale, en pourcentage, est classiquement égale à 100 x (1 - le rapport de la densité géométrique divisée par la densité absolue). Dans une mousse céramique selon l'invention, la porosité fermée représente typiquement moins de 10% de la porosité totale, de préférence moins de 5%, voire moins de 1% de la porosité totale.

La densité géométrique est mesurée suivant la norme ISO 5016:1997 ou EN 1094-4 et exprimée en g/cm³. Elle est classiquement égale au rapport de la masse de l'échantillon divisée par le volume apparent.

La valeur de densité absolue, exprimée en g/cm³, est classiquement mesurée en divisant la masse d'un échantillon par le volume de cet échantillon broyé de manière à supprimer la porosité.

On appelle « porosité ouverte » la porosité imputable à l'ensemble des pores accessibles. La porosité ouverte peut être mesurée selon la norme ISO15901-1.

La taille d'une cellule d'une mousse représentée sur une photo numérique d'une coupe de la mousse est le diamètre équivalent de son aire sur la photo. La distribution des tailles de cellule est réalisée, classiquement par analyse numérique, sur des photos représentant plus de 10, de préférence plus de 100, de préférence plus de 500 cellules, de préférence après une binarisation ou segmentation de l'image visant à en augmenter le contraste.

La distribution de la taille des cellules peut être représentée de manière cumulée, les tailles de cellule étant classées par ordre croissant. A chaque taille de cellule est ainsi associé un percentile qui correspond, sur la courbe de distribution cumulée, au pourcentage en nombre, c'est-à-dire sur la base du nombre total de cellules, de cellules ayant une taille inférieure à ladite taille. Par exemple, 10%, en nombre, des cellules ont une taille inférieure au percentile 10 et 90% des cellules, en nombre, ont une taille supérieure ou égale à ce percentile.

Les percentiles d₁₀, d₅₀, d₉₀ et d₁₀₀ de la population de cellules sont donc les tailles de cellules correspondant respectivement aux pourcentages de 10%, 50%, 90% et 100% sur la courbe de distribution cumulée des tailles de cellule classées par ordre croissant.

Le diamètre équivalent d'une ouverture ou d'une aire est le diamètre d'un disque de même surface que ladite ouverture ou de ladite aire, respectivement.

La tortuosité est mesurée par nanotomographie. Les images ont une résolution apte à une binarisation. L'utilisation d'un logiciel comme iMorph^{©} permet d'obtenir une caractérisation géométrique en trois dimensions et de calculer la tortuosité. La tortuosité est définie comme le rapport entre la longueur du parcours le plus court permettant de traverser l'échantillon dans le sens de son épaisseur, au sein de sa porosité, et la longueur du segment de droite joignant le point de départ et le point d'arrivée correspondant à ce parcours, c'est-à-dire la distance entre ces points.

"Comprendre", "comporter" et "présenter" doivent être interprétés de manière large et non limitative, sauf indication contraire.

### Description détaillée

L'homme du métier connaît les techniques classiques de moussage direct par agitation mécanique. EP 1 778 601 fournit en particulier des détails techniques suffisants pour mettre en œuvre les étapes a) à e).

**A l'étape a),** on procède de la manière suivante : On prépare d'abord, une barbotine A par dispersion de la poudre céramique et d'un dispersant dans de l'eau, selon une technique classique,

La quantité de poudre céramique dans la barbotine A est de préférence comprise entre 50 et 90 % en poids, de préférence entre 70 et 85% en poids, de la barbotine A. De préférence, le mélange M contient de 50 à 80%, de préférence de 60 à 80%, en poids de particules céramiques. La nature de la poudre céramique est adaptée en fonction de la mousse céramique à fabriquer.

Dans le cas par exemple de la fabrication de mousse en carbure de silicium recristallisé, la poudre peut être un mélange de particules ou une poudre de carbure de silicium dont la distribution granulométrique est de préférence bimodale. Le premier mode est de préférence inférieur à 5 µm, de préférence encore inférieur à 3 µm, de préférence toujours inférieur à 1 µm, et le second mode est de préférence supérieur à 10 µm, de préférence supérieur à 20 µm. Une telle distribution granulométrique permet avantageusement d'obtenir une mousse céramique présentant une porosité intergranulaire particulièrement développée. Selon un mode possible l'état de dispersion peut être obtenu en ajustant le pH de la barbotine en phase aqueuse comprenant le mélange ou la poudre minérale de SiC par l'ajout de soude. De préférence, le pH est ajusté pour être compris entre 10 et 11. Selon un autre mode possible, le dispersant, par exemple un tensio-actif de type polyacrylate, est choisi de manière à être efficace à la température de mélange.

De préférence, la viscosité de la barbotine est telle que la vitesse d'écoulement dans une filière de type DIN 4 CUP est comprise entre 20 et 40 secondes à 43°C, de préférence entre 30 et 36 secondes, et/ou comprise entre 10 et 30 secondes à 53°C, de préférence entre 18 et 28 secondes, en particulier pour une utilisation avec un prémélange B comprenant un gélifiant de type gélatine.

On prépare également un prémélange B par dissolution des agents gélifiant et moussant et éventuellement d'un agent stabilisant et/ou d'un agent durcissant et/ou d'un agent plastifiant dans de l'eau, à une température supérieure à la température de gélification de l'agent gélifiant, par solubilisation dans un liquide de préférence de l'eau.

L'agent gélifiant est de préférence un hydrocolloïde d'origine animale ou végétale apte à gélifier de manière thermoréversible ladite composition après moussage, par exemple de la gélatine, le carraghénane, ou un mélange de ceux-ci.

L'agent stabilisant peut être quelconque. De préférence, il présente la propriété de présenter une viscosité qui augmente d'au moins un facteur dix quand le gradient de la vitesse de son cisaillement diminue de 100 s⁻¹ à 0 s⁻¹. De préférence, l'agent stabilisant est choisi de manière que la viscosité du mélange M pendant le cisaillement, soit peu augmentée du fait de son incorporation dans ce mélange.

Avantageusement, il est ainsi possible d'utiliser les mélangeurs utilisés selon la technique antérieure sans avoir besoin d'augmenter la teneur en eau du mélange. L'augmentation de la teneur en eau entraînerait en effet des problèmes lors du séchage ultérieur.

De préférence, l'agent stabilisant est choisi pour être réversible. De préférence encore, on choisit l'agent stabilisant et l'agent gélifiant de manière que
- la viscosité de la mousse gélifiée soit supérieure ou égale à celle d'une mousse gélifiée obtenue à partir d'un mélange identique au mélange M mais qui ne contiendrait pas d'agent stabilisant, et
- la viscosité de la mousse obtenue entre les étapes b) et c) (avant gélification et après la fin de l'opération de moussage) soit supérieure ou égale à celle d'une mousse gélifiée obtenue à partir d'un mélange identique au mélange M mais qui ne contiendrait pas d'agent gélifiant.

L'agent moussant, de préférence un savon, est de préférence ajouté dans le prémélange B en une proportion comprise entre 25 et 75% en poids dudit prémélange. De préférence encore, la quantité d'agent moussant est déterminée de manière que sa teneur dans le mélange M soit comprise entre 0,5 et 3% en poids.

De préférence un agent plastifiant, de préférence un ajout à base de glycérol, de préférence de la glycérine, est de préférence ajouté dans le prémélange B selon une proportion comprise entre 0,5 et 2,5%, de préférence comprise entre 1 et 2% en poids de la masse de poudre céramique.

Le mélange M peut en outre contenir un ou plusieurs liants thermoplastiques usuellement utilisés en céramique. La barbotine A et le prémélange sous agitation mécanique, la température, dite " température de mélange " étant maintenue supérieure à la température de gélification de l'agent gélifiant. De préférence, les prémélanges A, et B sont mélangés immédiatement après leur préparation pour former le mélange M. Le pH du prémélange B peut être acide, basique ou neutre et est de préférence choisi de manière à permettre une bonne dispersion avec le prémélange A.

Selon un mode de réalisation possible, le prémélange aqueux B comprend l'agent gélifiant constitué de gélatine, l'agent moussant, un agent plastifiant tel que de la glycérine et un durcissant dilués dans 50 à 70% d'eau déminéralisée chauffé dans un bain-marie à 55°C.

A l'étape a), un stabilisant peut être ajouté, comme décrit dans EP 1 778 601 mais la présence d'un agent stabilisant est optionnelle. De préférence, le mélange M ne comporte pas d'agent stabilisant. Une absence de stabilisant est avantageuse pour réduire la taille de la porosité d'interconnexion, ce qui est bénéfique en matière de filtration de l'air.

De manière préférée, on ajoute audit mélange M un agent plastifiant en une quantité en poids comprise entre 0,25 et 1 fois celle dudit agent gélifiant. De préférence encore, l'agent plastifiant est choisi pour brûler à une température supérieure à la température d'évaporation du liquide servant, à l'étape a), à mettre en suspension la poudre céramique, généralement et de préférence de l'eau, de préférence déminéralisée.

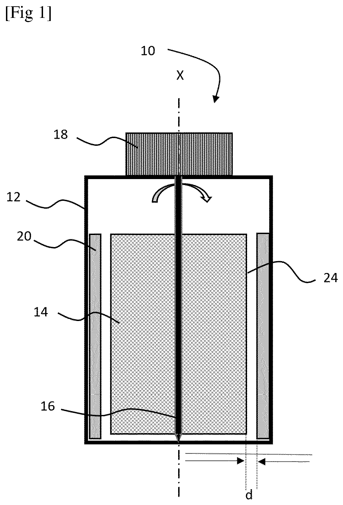

**A l'étape b),** le mélange M est cisaillé dans un malaxeur mousseur 10, par exemple comme celui représenté sur la figure 1. Le malaxeur mousseur 1 comporte classiquement
- un récipient 12 de forme cylindrique de base circulaire et d'axe X, dans lequel le mélange M est versé ;
- une ou plusieurs pales perforées 14 fixées à un arbre 16 coaxial au récipient 12 ; et
- un moteur 18 d'entrainement de l'arbre en rotation.

Le malaxeur est muni de contre-pales fixes 20 disposées radialement contre la face interne du récipient de manière à ménager une distance d de 5 à 20 mm entre l'extrémité radiale des pales et celle de chaque contre-pale lorsque les pales en rotation passent devant les contre-pales.

Les pales, de préférence identiques, de préférence sensiblement plane, et de préférence présentant une épaisseur inférieure à 10 mm, s'étendent de préférence sensiblement radialement par rapport à l'axe X. Elles sont de préférence équiangulairement réparties autour de l'axe X.

Le nombre de pales est de préférence supérieur à 1 et/ou inférieur à 10, de préférence inférieur à 5, de préférence inférieur à 4, de préférence inférieur à 3. Sur les figures 1 à 3, deux pales dont représentées à chaque fois.

De préférence, toutes les pales sont identiques. Dans la suite de la description, on ne décrit en détail qu'une pale.

Dans un mode de réalisation, une pale présente une forme sensiblement plane, de préférence présente la forme d'une plaque mince, de préférence de forme générale rectangulaire.

L'épaisseur de la pale est de préférence supérieure à 0,5 mm et inférieure à 10 mm. La longueur, ou « hauteur », de la pale, mesurée selon la direction de l'axe X, est de préférence au moins deux fois, de préférence au moins trois fois, de préférence au moins quatre fois supérieure à la largeur de ladite pale, mesurée radialement depuis l'axe X jusqu'à l'extrémité radialement extérieure, ou « extrémité libre » 24 de la pale, opposée à l'axe X.

La pale présente deux grandes faces opposées et parallèles, ou première et deuxième faces, sur lesquelles débouchent, par des premières et deuxième ouvertures, respectivement, des perforations 22. Les perforations peuvent être identiques ou différentes, de préférence identiques. Dans la suite de la description, on ne décrit en détail qu'une perforation.

La perforation est de préférence de forme générale cylindrique, de préférence de base circulaire. Elle débouche de préférence perpendiculairement aux première et deuxième faces. Les premières et deuxième ouvertures sont de préférence identiques, et présentent de préférence un diamètre équivalent compris entre 5 et 50 mm. Le diamètre des ouvertures de la pale est au moins 20 fois, de préférence au moins 50 fois et/ou moins de 1000 fois plus grand que la taille maximale de particules céramiques du mélange à cisailler.

Sur une face d'une pale, les ouvertures des perforations sont regroupées dans des zones perforées 26, séparées par des zones de renfort 28 non perforées. Des zones de renfort 28 peuvent être encore disposées aux extrémités radiales et longitudinales de la pale. Des exemples de zones perforées et de renfort sont encadrées par un trait interrompu sur la figure 2.

Une face d'une pale peut par exemple comporter une, deux, trois ou quatre zones perforées 26, identiques ou différentes, de préférence identiques. Dans une zone perforée, les ouvertures sont de préférence identiques et de préférence régulièrement réparties, de préférence sous la forme de rangées superposées, de préférence décalées d'un demi-pas d'une rangée à la suivante, de manière à disposer les ouvertures en quinconce. Dans une zone perforée, les ouvertures sont également de préférence distribuées de manière uniforme. Dans un mode de réalisation, la pale ne comporte aucune zone de renfort, sauf éventuellement le long de l'axe X et/ou aux extrémités supérieure et inférieure de la pale.

Le centre d'une ouverture est de préférence écarté du centre d'une ouverture qui lui est adjacente, de préférence de chaque ouverture qui lui est adjacente, d'une distance d'au moins deux fois, et de préférence de moins de 10 fois, son diamètre équivalent. De préférence, le centre d'une ouverture est écarté d'une même distance de l'ensemble des centres des ouvertures qui lui sont adjacentes.

De préférence, le pourcentage de la surface cumulée de l'ensemble des ouvertures d'une face sur la surface de ladite face, en y incluant la surface desdites ouvertures, est supérieur à 10%, et de préférence inférieur à 80%.

On appelle « axe radial » Y l'axe qui coupe perpendiculairement l'axe X, à mi-hauteur de la pale, et qui s'étend dans le plan général d'une face de la pale.

Une « fraction radiale d'extrémité » de cette face est une partie de ladite face qui s'étend, suivant Y, de l'extrémité libre de la pale jusqu'à une droite parallèle à l'axe X et à une position y suivant l'axe radial Y. La position *y* est donc mesurée à partir de l'extrémité libre de la pale (où *y* = 0). Sur la figure 3, on a représenté en trait interrompu une fraction radiale d'extrémité F₁, pour y = y₁.

Une « fraction radiale centrale » de cette face est une partie de ladite face qui s'étend, suivant Y, de l'axe X de la pale jusqu'à une droite parallèle à l'axe X et à une position y' suivant l'axe radial Y. La position y' est donc mesurée à partir de l'axe X (où *y'* = 0). Sur la figure 3, on a représenté en trait interrompu une fraction radiale centrale F₁', pour y' = y'₁.

La largeur y ou y' d'une fraction radiale peut être exprimée comme un pourcentage de la largeur de la face, c'est-à-dire du rayon de la pale.

Dans une fraction radiale centrale ou d'extrémité d'une face, de largeur y ou y' respectivement, on peut mesurer la surface cumulée de l'ensemble des ouvertures Syo ou Sy_{O}' respectivement, et la surface de ladite fraction radiale Sy_{T} ou Sy_{T}' respectivement, en y incluant la surface desdites ouvertures.

R_{y} ou R_{y'} expriment :
- le rapport de la surface cumulée de l'ensemble des ouvertures d'une fraction radiale d'extrémité Syo ou centrale Syo' sur la surface de ladite fraction radiale Sy_{T} ou Sy_{T}', divisé par
- le rapport de la surface cumulée de l'ensemble des ouvertures de la face sur la surface de ladite face.

R_{y} ou R_{y'} peut donc être supérieur à 1, par exemple si la fraction radiale considérée est une région qui comporte peu de zone de renfort par rapport à la face dans son ensemble. Par exemple, si les ouvertures sont concentrées en extrémité de pale, R_{y} > 1 et R_{y'} <1.

De préférence, pour toute valeur de y inférieure à 0,3, c'est-à-dire quelle que soit la fraction radiale d'extrémité considérée entre l'extrémité de pale et la position y = 30%, R_{y} > 1,3.

De préférence, pour toute valeur de y' inférieure à 0,3, c'est-à-dire quelle que soit la fraction radiale centrale considérée entre l'axe X et la position y' = 30%, de préférence pour toute valeur de y' inférieure à 50%, R_{y'} < 0,5, de préférence R_{y'} < 0,3.

Une « fraction axiale » d'une face d'une pale est une partie de ladite face qui s'étend, suivant l'axe X, de l'extrémité inférieure de la pale jusqu'à une droite perpendiculaire à l'axe X et à une position x suivant l'axe vertical X. Sur la figure 3, on a représenté en trait interrompu une fraction axiale A₁, pour x = x₁.

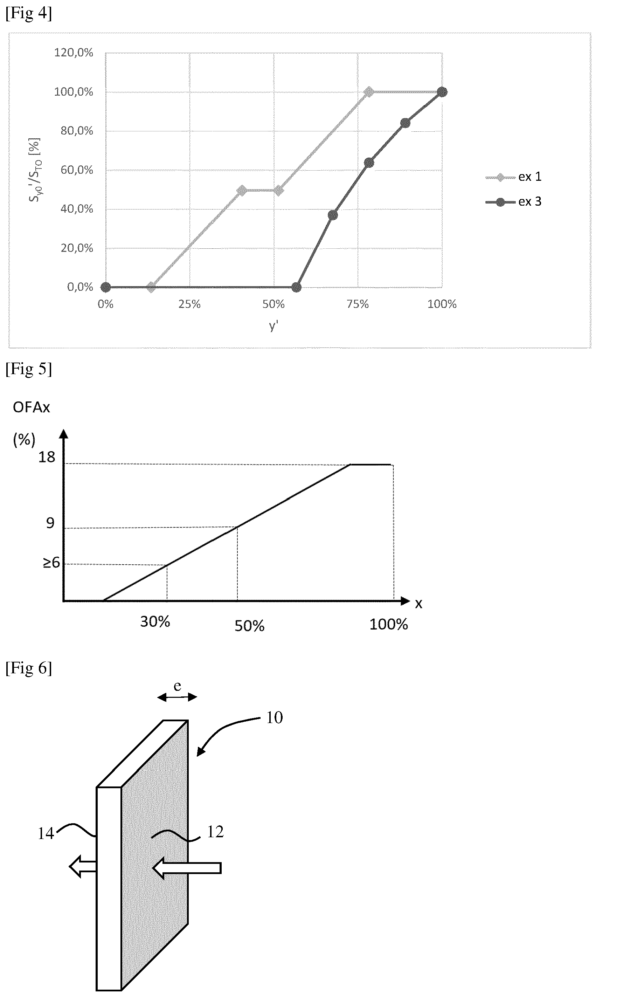

La hauteur x d'une fraction axiale peut être exprimée comme un pourcentage de la hauteur de la face, comme sur la figure 5.

Dans une fraction axiale d'une face, de hauteur x, on peut mesurer la surface cumulée de l'ensemble des ouvertures Sxo.

OFAx représente le rapport Sx_{O}/S, S étant la surface totale de la face, y compris la surface des ouvertures.

Sur la figure 5, on a représenté OFAx pour une pale de l'exemple 3 selon l'invention. Hormis pour les valeurs de x qui correspondent aux extrémités supérieure et inférieure de la pale, la courbe est une droite, ce qui indique que la surface des ouvertures dans la fraction axiale augmente en proportion de la hauteur x. La pente de la droite est légèrement supérieure à 18%.

De manière générale, la pente est de préférence supérieure à 10%, de préférence supérieure à 15% et/ou inférieure à 30%, de préférence inférieur à 25%, de préférence inférieure à 20%.

Dans un mode de réalisation, OFA₁₀₀ est supérieur à 10%, de préférence supérieur à 15% et/ou inférieur à 30%, inférieur à 25% ou inférieur à 20%.

Le mélange est versé dans le récipient, de préférence de manière à remplir initialement un tiers de la hauteur des pales.

L'homme du métier connaît d'autres facteurs que la distribution de perforations susceptibles de modifier le rapport (d₉₀-d₁₀) /d₅₀. En particulier, il sait que ce rapport peut être réduit en augmentant la viscosité du mélange avant agitation mécanique (par exemple en réduisant la température du bain-marie à l'étape a)), en augmentant la durée de cisaillement, en augmentant le nombre de contre-pales, ou en réduisant la distance d entre les pales et les contre-pales. La présence de perforations et leur distribution sont cependant le facteur prépondérant. Avec des pales perforées selon l'invention, il est ainsi possible d'obtenir un rapport (d₉₀-d₁₀) /d₅₀ selon l'invention avec les procédés de moussage conventionnels.

De manière préférée, la viscosité du mélange avant agitation mécanique (ou « moussage ») est comprise entre 1 et 6 Pa.s, mesurée à une vitesse de cisaillement de 50 s⁻¹ entre 35 et 65°C, de préférence entre 38°C et 55°C.

Le moteur 18 est ensuite mis en marche afin d'entrainer l'arbre 16, à une vitesse typiquement comprise entre 100 et 1000 tours par minute, pour faire mousser le mélange.

Le cisaillement peut résulter d'une agitation mécanique avec un ensemble de pales perforées telles que décrites précédemment, et, en outre d'une insufflation de gaz. Dans le cas de l'insufflation de gaz, on préfère utiliser une membrane munie de trous calibrés.

Pendant l'étape b), si la viscosité de l'agent stabilisant est réversible sous l'effet du cisaillement, le cisaillement réduit la viscosité du mélange. L'étape b) s'effectue à une température supérieure à la température de gélification de l'agent gélifiant, par exemple à la température de mélange.

A l'étape b), la durée de cisaillement est de préférence supérieure à 25 min, de préférence supérieure à 35 minutes, et/ou inférieure à 120 minutes.

A l'étape b), les conditions de cisaillement sont de préférence équivalentes à celles d'un cisaillement dans lequel :
- la durée de cisaillement est supérieure à 25 min, de préférence supérieure à 35 minutes, de préférence supérieure à 45 minutes, de préférence supérieure à 55 minutes, et inférieure à 120 minutes, de préférence inférieure à 90 minutes, de préférence inférieure à 75 minutes, et
- la vitesse de rotation est supérieure à 200 tours/min, de préférence supérieure à 300 tours/min, de préférence supérieure à 400 tours/min, de préférence supérieure à 450 tours/min, et inférieure à 900 tours/min, de préférence inférieure à 800 tours/min, de préférence inférieure à 700 tours/min, de préférence inférieure à 600 tours/min, et
- le malaxeur est identique à celui utilisé pour l'exemple 1.

L'homme du métier sait comment établir de telle conditions de cisaillement.

De préférence, le cisaillement comprend deux phases de malaxage successives. Pendant la première phase, la mousse en cours de formation monte dans le récipient 12 jusqu'à atteindre le bord supérieur des pales, c'est-à-dire jusqu'à ce que les pales soient recouvertes par le mélange en cours de moussage. La durée de cette première phase, ou « temps de recouvrement », est typiquement de 5 à 10 minutes. Pendant la deuxième phase, qui suit immédiatement la première phase et dure typiquement entre 20 et 60 minutes, la vitesse de pénétration de l'air dans la mousse est plus faible que pendant la première phase, bien que la vitesse de rotation des pales soit identique à celle appliquée pendant la première phase.

De préférence, la deuxième phase, qui démarre à partir du moment où le niveau de la mousse atteint le haut des pales, dure plus de 25 minutes, de préférence plus de 30 minutes, de préférence plus de 40 minutes et/ou moins de 60 minutes.

Les inventeurs ont observé que l'allongement de la deuxième phase permet, grâce à l'utilisation de pales présentant une répartition particulière de perforations, d'obtenir une mousse dont la dispersion des tailles de bulle est plus réduite, c'est-à-dire une distribution de tailles de cellule beaucoup plus resserrée, comme le montrent les exemples qui suivent.

Après obtention de la mousse intermédiaire, on arrête le cisaillement, puis, éventuellement, on coule la mousse intermédiaire dans un moule.

**A l'étape c),** on refroidit le plus rapidement possible la mousse intermédiaire jusqu'à une température, en °C, au moins 2 fois, voire au moins 3 fois ou encore au moins cinq fois plus faible que la température de gélification de l'agent gélifiant, de préférence jusqu'à température ambiante (10-25°C). La gélification permet avantageusement d'obtenir une mousse gélifiée suffisamment rigide pour être manipulée sans se dégrader. Le procédé se prête donc bien à une mise en œuvre industrielle.

De préférence, la mousse intermédiaire obtenue à l'issue de l'étape b) est refroidie brutalement (trempe), de préférence à une vitesse de refroidissement supérieure à 20°C/minute, de préférence supérieure à 30°C/minute. De préférence, la mousse intermédiaire est refroidie immédiatement après la fin de l'étape b), de préférence moins de 5 minutes après la fin de l'étape b).

Dans un mode de réalisation, à l'étape c), la mousse intermédiaire est soumise, de préférence au début de l'étape c), à une température inférieure à la température de solidification de la mousse intermédiaire, de préférence jusqu'à congélation complète de ladite mousse intermédiaire. Une telle congélation est notamment utile lorsque l'étape d) comporte un séchage par voie supercritique.

Dans un mode de réalisation préféré, la mousse intermédiaire est disposée dans une étuve climatique avant d'être refroidie, et en particulier dans une étuve climatique utilisée à l'étape d).

Le refroidissement rapide permet avantageusement de gélifier la mousse intermédiaire sans en modifier substantiellement la structure.

**A l'étape d),** la mousse gélifiée issue de l'étape c) est de préférence séchée en deux opérations successives.

La première opération de séchage consiste à augmenter progressivement la température tout en la maintenant inférieure à la température de gélification, de préférence dans une étuve climatique, de préférence dans l'étuve climatique utilisée pour la gélification. Dans une étuve climatique, la température et l'humidité sont régulées, de préférence jusqu'à sensiblement saturer en humidité l'intérieur de l'étuve, et une ventilation forcée permet d'extraire l'eau. La température est de préférence augmentée à mesure que l'humidité résiduelle de la mousse gélifiée diminue, sans dépasser la température de gélification. La température est de préférence augmentée pendant une durée supérieure à 1 heure, de préférence supérieure à 24 h, à 48 h, à 72 h, à 96 h, à 120 h, et/ou inférieure à 1 semaine. Elle peut être augmentée par palier ou progressivement, de préférence par palier.

Cette première opération de séchage est de préférence poursuivie jusqu'à ce que l'humidité résiduelle de la mousse gélifiée atteigne une valeur intermédiaire, de préférence supérieure à 70% de l'humidité initiale et/ou inférieure à 95%, de préférence inférieure à 90% de l'humidité initiale. De préférence, la première opération de séchage est poursuivie jusqu'à ce que l'humidité résiduelle de la mousse gélifiée soit inférieure à 10%, de préférence inférieure à 5%, et/ou supérieure à 2%, de préférence supérieure à 3% ou à 4%.

Dans un mode de réalisation, lors de la première opération de séchage de l'étape d), la mousse gélifiée est placée dans une étuve climatique sous ventilation forcée selon le cycle suivant :
- à 5°C pendant 24 h sans régulation d'humidité ; puis
- à 15°C pendant 72 h à 80% d'humidité ; puis
- à 20°C pendant 24 h à 80% d'humidité ; puis
- à 25°C à 80% d'humidité jusqu'à atteindre au moins 90% de perte d'humidité.

Alternativement ou en complément au séchage décrit ci-dessus, par augmentation progressive de la température sous humidité contrôlée, la première opération de séchage peut comporter un séchage supercritique, de préférence en autoclave.

De préférence, la mousse intermédiaire est préalablement congelée, de manière à solidifier l'ensemble de la phase liquide. Le séchage supercritique consiste classiquement à augmenter lentement la température et la pression environnant la mousse intermédiaire avant de dépressuriser de préférence à température constante, après être passé au-dessus du point critique de la phase liquide.

La deuxième opération de séchage suit de préférence immédiatement la première opération de séchage. Elle comporte de préférence un séchage à une température supérieure à 40°C, à 50°C, à 60°C, à 80°C ou à 100°C, de préférence jusqu' à réduire l'humidité résiduelle à moins de 1%.

Dans un mode de réalisation, la deuxième opération de séchage, de préférence réalisée dans une étuve de séchage, est réalisée selon le cycle suivant :
- montée en température à une vitesse comprise entre 10 et 40°C/ h, de préférence entre 20 et 30°C/h, jusqu'à 100°C ;
- palier à 100°C pendant une durée d'au moins 1 h, de préférence supérieure à 2 h, voire supérieure à 3 h ;
- descente en température, de préférence libre, jusqu'à 20°C.

Les conditions de séchage préférées décrites ci-dessus permettent avantageusement de figer la structure de la mousse, même en l'absence d'agent stabilisant, ce qui facilite le contrôle de cette structure et permet notamment de limiter la taille des pores, en particulier de manière à ce que les pores de taille supérieure à 300 µm représentant moins de 10% en volume de la porosité. Le volume des pores peut être mesuré par porosimétrie mercure.

Elles présentent également l'avantage d'être faciles à mettre en œuvre, même de manière industrielle.

Enfin, elles évitent un affaissement de la mousse, même en l'absence d'agent stabilisant, ce qui permet de fabriquer une mousse céramique présentant une grande épaisseur, par exemple supérieure à 60 mm ou supérieure à 80 mm.

L'invention permet également de fabriquer des mousses sous la forme de plaques fines présentant une bonne résistance mécanique, et en particulier de fabriquer une mousse présentant une grande face filtrante relativement à son épaisseur, typiquement dont le ratio de l'épaisseur moyenne sur la surface moyenne des faces de la mousse est compris entre 0,2 mm/100 cm² et 10 mm/100 cm². De telles plaques fines peuvent être notamment utiles comme support de cuisson de déliantage pour la cuisson de pièces céramiques.

D'une manière générale, l'homme du métier sait comment modifier la distribution de la taille des pores, en particulier en modifiant la rhéologie et le cisaillement.

Notamment, il sait augmenter la porosité totale, et en particulier la porosité d'interconnexion, en augmentant la quantité d'air dans la mousse, par exemple en augmentant la durée et/ou la vitesse de cisaillement.

Il sait également que la porosité intergranulaire peut être augmentée en augmentant la taille des particules de la poudre céramique.

Après étuvage et avant ou après cuisson par traitement à haute température, la mousse céramique peut être usinée pour obtenir une pièce aux dimensions souhaitées.

**A l'étape e),** la préforme issue de l'étape d) est calcinée sous air, à sa température de frittage, à savoir 1200-1500 °C pour la cordiérite et 1400-2300 °C pour l'alumine, la mullite ou la zircone ou le carbure de silicium. Des conditions possibles pour le frittage à haute température du carbure de silicium sont par exemple décrites dans FR 2 313 331.

Les conditions pour la cuisson à l'étape e) permettant de fabriquer des mousses céramiques selon l'invention sont bien connues, la recristallisation du carbure de silicium étant une technique ancienne. On peut par exemple se référer à US 2,964,823, délivré le 20 décembre 1960, ou à l'article " Finely Layered Recrystallized Silicon Carbide for Diesel Particulate Filters ", Process Engineering, cfi/Ber. DKG 81 (2004) n°10.

De préférence, la préforme est calcinée sous atmosphère non oxydante, de préférence sous atmosphère neutre, de préférence encore sous argon, à une température permettant d'obtenir du carbure de silicium recristallisé, de préférence comprise entre 1800 et 2500 °C, de préférence entre 2050 et 2350 °C.

D'autres conditions de cuisson par traitement à haute température sont envisageables, de préférence pour qu'elles conduisent à une recristallisation du carbure de silicium.

Dans un mode de réalisation, la poudre céramique utilisée à l'étape a) comprend ou est constituée de matériau céramique non oxyde, et la cuisson de ladite préforme à l'étape e) est de préférence réalisée sous atmosphère non oxydante, de préférence sous argon, à une température supérieure à 1400°C et inférieure à 2300°C.

### Mousse céramique

La mousse céramique présente des cellules, de forme générale sphérique, formées par agglomération de grains, cette agglomération laissant subsister des interstices, ou « pores intergranulaires » entre les grains.

Les parois présentent ainsi une porosité dite « intergranulaire ». La porosité intergranulaire est donc constituée par les espaces interstitiels que crée nécessairement entre des grains l'agglomération de ces grains.

Les cellules sont interconnectées par des fenêtres d'interconnexion. Des cellules superficielles débouchent par des ouvertures vers l'extérieur. La porosité d'interconnexion est créée par les « pores d'interconnexion », à savoir les fenêtres d'interconnexion entre les cellules et les ouvertures vers l'extérieur des cellules superficielles.

La porosité intergranulaire est fonction de la taille des grains de la poudre céramique, en particulier de carbure de silicium, utilisée.

La porosité d'interconnexion est fonction de l'agent moussant mis en œuvre, en particulier en fonction de sa quantité dans la charge de départ qui est mise en forme pour constituer la préforme.

La présence de la porosité intergranulaire confère en effet à la fois une très grande surface disponible et une faible densité. Les mousses à porosité intergranulaire sont donc efficaces pour la filtration et/ou comme support pour un revêtement d'inactivation d'un ou plusieurs agents pathogènes, et/ou comme support de catalyseur, tout en étant légères.

De préférence, la taille médiane des pores intergranulaires est 10 à 100 fois plus petite que celle des pores d'interconnexion.

De préférence, la répartition de la taille des pores est bimodale. Plus précisément, la distribution de la porosité, mesurée avec un porosimètre au mercure, présente un premier pic principal centré sur une première taille de pores et un deuxième pic principal centré sur une deuxième taille de pores.

La première taille de pores est considérée comme la taille médiane des pores intergranulaires, et est représentative de la porosité intergranulaire. Elle est de préférence inférieure à 25 µm, voire inférieure à 20 µm et supérieure à 4 µm, de préférence supérieure à 7 µm, de préférence supérieure à 10 µm, de préférence supérieure à 13 µm.

De préférence, la porosité intergranulaire est d'au moins 5 %, de préférence d'au moins 8 %, de préférence encore d'au moins 10% et/ou inférieure à 25%, voire inférieure à 20%.

La deuxième taille de pores est considérée comme la taille médiane des pores d'interconnexion et est représentative d'une porosité d'interconnexion, constituant sensiblement le complément à 100% de la porosité intergranulaire. Elle est de préférence inférieure à 400 µm, voire inférieure à 300 µm, voire inférieure à 200 µm, voire inférieure à 180 µm, voire inférieure à 160 µm, de préférence inférieure à 150 µm, voire inférieure à 140 µm, de préférence, notamment pour une mousse présentant une porosité totale inférieure à 80%, inférieure à 130 µm, et de préférence supérieure à 40 µm, voire supérieure à 50 µm, voire supérieure à 80 µm.

De préférence, au moins une partie de la surface définie par le réseau poreux de la mousse céramique est revêtue d'un revêtement d'inactivation d'un ou plusieurs agents pathogènes, et/ou d'un revêtement catalytique adapté à une réaction d'au moins un polluant atmosphérique.

La mousse céramique présente également l'avantage de pouvoir être nettoyée et/ou purifiée pour être réutilisée. Elle génère donc peu de déchets.

Selon un mode de réalisation particulier, il peut être déposé une ou plusieurs couches superficielles superposées de la surface de la mousse céramique.

En particulier, la mousse céramique peut comporter un corps poreux revêtu d'une ou plusieurs couches superficielles, la porosité totale et/ou la taille médiane des pores des couches superficielles étant différente, de préférence inférieure à la porosité totale au barycentre du corps poreux.

Dans un mode de réalisation particulièrement avantageux, la porosité totale de la couche superficielle est inférieure à 0,95, à 0,90 ou 0,8 fois la porosité totale au barycentre du corps poreux. De préférence la porosité totale de la couche superficielle est supérieure à 30%, voire supérieure à 35% et de préférence inférieure à 70%, voire inférieure à 60%, voire inférieure à 50%. De préférence, les pores de la couche superficielle présentent une taille médiane supérieure à 1 µm, voire supérieure à 2 µm, voire supérieure à 3 µm et inférieure à 20 µm, voire inférieure à 10 µm, voire inférieure à 5 µm. L'épaisseur de la couche superficielle est de préférence comprise entre 5 et 500 µm, de préférence supérieure à 10 µm et/ou inférieure à 400 µm, voire inférieure à 200 µm, voire inférieure à 100 µm.

Dans un mode de réalisation, la mousse céramique comporte plusieurs dites couches superficielles superposées à partir de la surface du corps poreux, les couches céramiques superficielles superposées présentant des porosités totales respectives et/ou des tailles médianes de pores différentes.

Dans un mode de réalisation, la porosité totale et/ou la taille médiane des pores est d'autant plus faible que la couche superficielle est éloignée du corps poreux. Il existe ainsi un gradient de porosité totale, la porosité totale et la taille médiane de la couche définissant la face d'entrée du fluide à filtrer-étant inférieure à celles de la ou des autre(s) couche(s).

De préférence, la porosité totale d'une couche superficielle, de préférence de chaque couche superficielle est supérieure à 30%, voire supérieure à 35% et de préférence inférieure à 70%, voire inférieure à 60%, voire inférieure à 50%.

De préférence, les pores d'une couche superficielle, de préférence de chaque couche superficielle présentent une taille médiane supérieure à 1 µm, voire supérieure à 2 µm, voire supérieure à 3 µm et inférieure à 20 µm, voire inférieure à 10 µm, voire inférieure à 5 µm.

L'épaisseur d'une couche superficielle, de préférence de l'ensemble des couches superficielles est de préférence comprise entre 5 et 500 µm, de préférence supérieure à 10 µm et/ou inférieure à 400 µm, voire inférieure à 200 µm, voire inférieure à 100 µm.

Les différentes couches peuvent résulter de la juxtaposition de différentes mousses céramiques unitaires ou bien de la projection d'un revêtement adhérent sur la surface du corps poreux ou bien de l'imprégnation d'une partie du corps poreux afin d'en modifier localement la porosité.

En particulier lorsque la mousse céramique est en carbure de silicium recristallisé, une dite couche superficielle peut être obtenue par imprégnation d'une partie de l'épaisseur de la préforme par une barbotine à base de carbure de silicium. La barbotine peut optionnellement comporter des agents porogènes comme un agent moussant. La barbotine remplit alors au moins partiellement les pores. Après frittage, elle conduit ainsi à une dite couche superficielle.

De préférence, la partie imprégnée s'étend à partir de la face d'entrée du fluide à filtrer.

Une porosité variable selon la profondeur permet avantageusement de piéger mécaniquement des particules de différentes tailles, et donc d'élargir le spectre des applications possibles.

Selon une variante avantageuse, quel que ce soit le type de mousse, la mousse céramique est dépourvue d'un revêtement. Elle agit alors comme un pur filtre.

Selon un mode particulièrement avantageux illustré sur la figure 6, la mousse selon l'invention se présente sous forme d'une pièce 10 présentant deux faces opposées, de préférence sensiblement parallèles, de préférence de même aire. L'épaisseur moyenne « e » de la mousse, représentant la distance moyenne entre lesdites faces, peut être évaluée par des mesures classiquement réalisées avec un pied à coulisse. La surface peut être mesurée macroscopiquement classiquement à l'aide d'un mètre ruban. La surface moyenne des faces de la mousse est la somme des surfaces de chaque face divisée par deux. Une de ces faces est de préférence une « face amont » 12 par laquelle un fluide pénètre dans la mousse afin d'y être filtré, puis de ressortir, au moins une partie, par la face aval 14 opposée. De préférence le rapport de l'épaisseur moyenne sur la surface moyenne des deux faces de la mousse est supérieur ou égal à 0,2 mm/100 cm².

Une telle mousse est par exemple utilisée pour filtrer et/ou faciliter l'évacuation des gaz de déliantage à une température typiquement comprise entre 200°C et 800°C, la mousse étant en appui sur un support de cuisson de céramique. De préférence, le support de cuisson est en un matériau choisi parmi le SiC recristallisé, le Sic fritté dense sans pression, le SiC lié par une phase nitrure de Si et/ou d'Al.

Lorsque la mousse n'est pas supportée autrement que par elle-même, le rapport de l'épaisseur moyenne sur la surface moyenne est de préférence supérieur à 0,5 mm/100 cm², de préférence supérieur ou égal à 1 mm/100 cm², de manière plus préférée supérieur à 5 mm/100 cm², voire supérieur à 10 mm/100 cm².

### Exemples de réalisation

Les exemples qui suivent sont fournis à titre uniquement illustratif. Ils ne sont pas limitatifs et permettent de mieux comprendre les avantages techniques liés à la mise en œuvre de la présente invention. Les exemples 1 et 2 sont comparatifs. L'exemple 3 est selon l'invention.

Dans les exemples qui suivent, les matières premières employées ont été choisies parmi :
- du Prox(R) BO3 un dispersant à base de polyacrylate d'ammonium, commercialisé par Synthron ;
- de la gélatine GPA AO, un gélifiant commercialisé par Wesardt International;
- du RHODOVIOL(R) 4/125, un liant à base d'alcool polyvinylique à faible taux d'hydrolyse (88 mol%) commercialisé par Rhodia PPMC ;
- de la glycérine, un agent plastifiant commercialisé par Moulet Peinture (Avignon - France) ; et
- du Schaumungsmittel W53FL, un agent moussant à base de polyacrylate d'ammonium, commercialisé par Zschimmer & Schwarz GmbH.

Les proportions des poudres de carbure de silicium et des additifs utilisés pour fabriquer les mélanges mousseux sont fournis dans le tableau 1 suivant. SiC₁, SiC₂, et SiC₃ désignent les pourcentages massiques des trois poudres de carbure de silicium utilisées, sur la base de la matière minérale. Les pourcentages des additifs sont fournis sur la base de la masse de la matière minérale (SiC).

Pour chaque exemple, un prémélange aqueux B comprenant la gélatine, l'agent moussant, la glycérine et le durcissant dilués dans 58% d'eau déminéralisée a été chauffé dans un bain-marie à 43°C pour les exemples 1 et 3, et de 35°C pour l'exemple 2, l'objectif étant, pour l'exemple 2, d'augmenter la viscosité du mélange avant l'étape de moussage tout en restant au-dessus de la température de gélification.

La barbotine en phase aqueuse A comprenant les poudres minérales de SiC, dont la charge massique est de 80% et dont le pH a été ajusté par ajout de soude à 10,5 a été ajoutée au prémélange B.

Le mélange obtenu a été versé dans un malaxeur mousseur similaire à celui de la figure 1.

Le malaxeur mousseur était équipé d'un récipient de forme cylindrique ayant un diamètre interne d'environ 250 mm et une hauteur de 460 mm environ, et de deux pales planes identiques, s'étendant dans un même plan passant par l'axe de rotation.

Chaque pale présentait une hauteur de 300 mm et une largeur totale de 52,5 mm (rayon de l'axe de 12,5 mm puis 40 mm). Chaque pale était traversée, suivant la direction de son épaisseur, par des perforations 22 cylindriques de base circulaire, arrangées en quinconce, et ayant un diamètre de 8 mm. Les centres de deux ouvertures adjacentes étaient typiquement espacés de 12 mm.

Pour l'exemple 1 et l'exemple 2, les perforations étaient réparties de manière sensiblement uniforme radialement et dans le sens de la hauteur de la pale, hormis dans des zones de renfort non perforées 32 constituant des renforts, comme cela est représenté sur la figure 2. Par ailleurs, l'OFA₁₀₀ de chaque pale utilisée dans l'exemple 1 était de 18% et l'OFAx augmentait de manière sensiblement constante en dehors des zones de renfort non perforées horizontales (qui, au total, s'étendent sur moins de 20% de la hauteur de la pale), comme cela est représenté par la figure 5.

Pour l'exemple 3, le nombre, les dimensions et la disposition des pales ainsi que le nombre et les dimensions des perforations étaient identiques à celles des pales de l'exemple 1, mais les perforations étaient réparties différemment. L'OFA₁₀₀ des pales était donc de 18%, comme pour l'exemple 1. En revanche, les pales utilisées pour la réalisation de l'exemple 3 présentaient une concentration surfacique des ouvertures (surface cumulée des ouvertures débouchant sur une fraction radiale de la face divisée par la surface de ladite fraction radiale) est de 33,7% pour toute fraction radiale d'extrémité F₁ représentant 30% de la largeur de la pale considérée, celle sur la fraction radiale centrale F₁' représentant également 30% de la largeur de la pale considérée étant égale à 0%. Les pales étaient en effet similaires à celles représentées sur la figure 3.

Dans une fraction radiale d'une face, de largeur y ou y', on a mesuré la surface totale de l'ensemble des ouvertures Syo ou Syo'.

Le rapport Sy_{O}/S_{TO} ou Sy_{O}'/S_{TO} de la surface totale de l'ensemble des ouvertures d'une fraction radiale d'extrémité Syo ou centrale Syo' sur la surface totale de l'ensemble des ouvertures de la face S_{TO} varie de 0 à la position y = 0 ou y' = 0, à 1 à la position y = 100% ou y' = 100%, respectivement. Ce rapport augmente donc si la fraction radiale considérée s'élargit pour incorporer des ouvertures, ou stagne si elle s'élargit pour incorporer une zone de renfort.

Le rapport Sy_{O}'/S_{TO} en fonction de y', c'est-à-dire l'évolution du pourcentage surfacique des ouvertures en partant de l'axe X, est représenté sur la figure 4.

La figure 4 illustre que les ouvertures sont concentrées à proximité de l'axe X pour l'exemple 1 et l'exemple 2, et à proximité de l'extrémité libre de la pale pour l'exemple 3 selon l'invention.

Le malaxeur mousseur était enfin muni de trois contre-pales fixes espacées de 120 degrés autour de l'axe de rotation et disposées radialement contre la face interne du récipient de manière à ménager une distance d de 12,5 mm entre l'extrémité radiale libre des pales et celle de chaque contre-pale lorsque les pales en rotation passaient devant la contre-pale.

Le mélange versé dans le récipient s'étendait depuis le fond du récipient jusqu'à une hauteur initiale d'environ 160 mm, le reste de l'intérieur du récipient était occupé par de l'air.

Le mélange a été mis en mouvement par l'entrainement en rotation des pales à une vitesse de 500 tours par minute autour de l'axe de symétrie du récipient, fixe (étape b)).

Pour l'exemple 1, le temps de recouvrement de la pale par la mousse a été de 7 minutes, de l'air continuant ensuite à pénétrer dans la mousse pendant les 13 minutes suivantes, à une vitesse réduite. En fin de malaxage, la température de la mousse intermédiaire était de 49°C.

Pour l'exemple 2, le temps de recouvrement de la pale par la mousse a été de 6 minutes, de l'air continuant ensuite à pénétrer dans la mousse pendant les 14 minutes suivantes, à une vitesse réduite. En fin de malaxage, la température de la mousse intermédiaire était de 41°C.

Pour l'exemple 3, le temps de recouvrement de la pale par la mousse a été de 6 minutes, de l'air continuant ensuite à pénétrer dans la mousse pendant les 44 minutes suivantes, à une vitesse réduite. En fin de malaxage, la température de la mousse intermédiaire était de 50°C.

La mousse intermédiaire ainsi obtenue a été coulée, à température ambiante (20°C), dans un moule permettant de fabriquer une préforme présentant la forme d'une plaque épaisse de dimensions 600mm x 400mm x 65mm.

Après coulage, le moule a été placé dans une étuve climatique sous ventilation forcée.

La température dans l'étuve a été descendue à 5°C pour gélifier la mousse intermédiaire (étape c)).

Puis la mousse gélifiée obtenue a été séchée (étape d)), dans l'étuve climatique, selon le cycle suivant (première opération de séchage) :
5°C pendant 24 h sans régulation d'humidité ;
15°C pendant 72 h à 80% d'humidité ;
20°C pendant 24 h à 80% d'humidité ;
25°C à 80% d'humidité jusqu'à atteindre au moins 90% de perte d'humidité.

Le moule a ensuite été placé dans une étuve de séchage classique selon le cycle suivant (deuxième opération de séchage) :
montée à 25°C/h jusqu'à 100°C ;
palier de 4 h à 100°C ;
descente libre jusqu'à 20°C.

Après démoulage, la préforme résultant du séchage a été cuite à 2240°C pendant 3 heures sous Argon afin d'obtenir une plaque de mousse de carbure de silicium recristallisé (étape e)).

La mousse céramique de l'exemple 1 a été réalisée à partir de l'enseignement de WO2006018536A1, en particulier des exemples 21 à 23.

Les mousses présentent la structure cellulaire ou « alvéolaire » classique des mousses. En particulier, elles présentent une structure dans laquelle les cellules sont dispersées sensiblement aléatoirement dans les trois dimensions de l'espace.

Typiquement, les mousses présentent une grande connectivité des macropores et une grande surface spécifique, ce qui conduit à une perméabilité élevée.

Les cellules définissent chacune un volume de forme générale sphérique car elles sont formées par agglomération de grains céramiques autour de bulles d'air.

La mousse de chaque exemple a été caractérisée de la façon suivante :
**La taille des cellules et la distribution des tailles de cellule** a été déterminée par analyse d'images de sections de la mousse. Plus précisément, les étapes successives suivantes, classiques dans le domaine, ont été réalisées :
- Une série d'images de différentes sections de la mousse est acquise à l'aide d'un appareil photo numérique. Pour plus de netteté, les clichés sont effectués sur des sections résultant d'une découpe de la mousse suivie d'un soufflage et d'un nettoyage dans un bain ultrasons afin d'enlever toute trace de poussière d'usinage et obtenir une structure propre.

L'acquisition de chaque image est effectuée sur une surface de mesure d'au moins 10 cm² afin d'obtenir des valeurs représentatives de l'ensemble de la section.
- Les images sont de préférence soumises à des techniques de binarisation, bien connues dans les techniques de traitement de l'image, pour augmenter le contraste du contour des cellules représentées sur la surface de mesure.
- Une mesure d'aire est réalisée pour chaque cellule représentée sur la surface de mesure.

Le diamètre équivalent de cellule, ou « taille de cellule », est le diamètre d'un disque parfait de même aire que celui mesuré pour ladite cellule (cette opération pouvant éventuellement être réalisée à l'aide d'un logiciel dédié, notamment Visilog^{®} commercialisé par Noesis).
- Une distribution de taille de cellules selon une courbe classique de répartition et en particulier une taille médiane des cellules constituant la mousse sont ainsi déterminées, cette taille médiane ou « diamètre médian », correspondant au diamètre équivalent divisant ladite distribution en une première population ne comportant que des cellules de diamètre équivalent supérieur ou égal à cette taille médiane et une deuxième population comportant que des cellules de diamètre équivalent inférieur à cette taille médiane.

**Le volume et la taille de pore,** en particulier les pores des parois et les pores d'interconnexion, ont été mesurés selon la norme ISO 15901-1.2005 à l'aide d'un porosimètre Autopore IV série 9500 Micromeritics, par intrusion de Mercure, jusqu'à 2 bar, dans un échantillon d'environ 1 cm³ prélevé au cœur de la plaque de mousse.

La courbe de distribution de la taille des pores présente deux pics principaux centrés sur des première et deuxième tailles de pore, reportées dans le tableau 1 ci-dessous. L'aire du 1^{er} pic correspond au volume de pores intergranulaires des parois délimitant les cellules de la mousse.

**La perte de charge** a été mesurée à la température de 20°C et sous un débit d'air sec de 47,5 litres / minute, en moyenne sur 5 pastilles de 36 mm de diamètre et 4 mm de hauteur prélevées au cœur de chaque mousse. Plus la perte de charge est faible, meilleure est la performance. Un indice 100 a été attribué à la mousse de l'exemple 1 à titre de référence pour comparaison avec les autres exemples. Un indice inférieur à 100 indique une mousse qui présente proportionnellement une perte de charge plus faible par rapport à l'exemple 1 de référence. Un indice inférieur à 95 est considéré comme représentatif d'un avantage significatif.

**La résistance à la flexion équibiaxiale** a été mesurée selon la norme ASTM C 1499 2009, en moyenne sur 5 pastilles de 36 mm de diamètre et 4 mm de hauteur prélevées au cœur de chaque mousse. Plus la résistance mécanique est élevée, meilleure est la performance. Afin de tenir compte de l'impact de la porosité, le module de rupture en flexion obtenu a été multiplié par la porosité totale pour chaque exemple. Un indice 100 a été attribué à la mousse de l'exemple 1 à titre de référence pour comparaison avec les autres exemples. Un indice inférieur à 100 indique une mousse proportionnellement moins résistante mécaniquement par rapport à la mousse de l'exemple 1 de référence. Un indice d'au moins 70 est considéré comme satisfaisant.

**L'efficacité de filtration** a été évaluée au regard de la norme NF-EN 14683. Un test avec aérosol d'eau inoculée de bactéries (*Staphylococcus aureus*) dont la taille moyenne est de 3 µm a été utilisé conformément à la pratique pour les masques chirurgicaux. Plus le taux de filtration est élevé, meilleure est la performance. Une performance supérieure à 99,0% est considérée comme nécessaire. Une performance supérieure à 99,5% est recherchée pour les applications les plus exigeantes.

**[Tableau 1]**

| Exemple | 1 | 2 | 3 |
|---|---|---|---|
| SiC₁ (D₅₀=1 micromètre) | 13 | | |
| SiC₂ (D₅₀=2,5 micromètres) | 21 | | |
| SiC₃ (D₅₀=45 micromètres) | 66 | | |
| Total matière minérale | 100 | | |
| Gélatine (ajout en % de la matière minérale) | +3,0 | | |
| Agent moussant (ajout en % de la matière minérale) | +2,1 | | |
| Glycérine (ajout en % de la matière minérale) | +1,5 | | |
| Agent durcissant (ajout en % de la matière minérale) | +0,7 | | |

| **Paramètres de procédé** | | | |
|---|---|---|---|
| Température bain marie (°C) | 43 | 35 | 43 |
| OFA₁₀₀ (%) | 18 | | |
| Concentration surfacique ouvertures de la fraction radiale centrale F₁' (%) | 5,5 | | 0 |
| Concentration surfacique ouvertures de la fraction radiale d'extrémité F₁ (%) | 5,5 | | 33,7 |

| **Résultats de la caractérisation au porosimètre Mercure** | | | |
|---|---|---|---|
| Volume de pores (porosité totale, en %) | 83,1 | 84,1 | 83 ,4 |
| Taille de pore du 1^{er} pic (µm) | 18 | 15 | 20 |
| Taille de pore du 2^{ème} pic (µm) | 130 | 148 | 133 |

| **Résultats de la caractérisation de la taille de cellules par analyse d'image** | | | |
|---|---|---|---|
| d₅₀ de taille de cellules (µm) | 335 | 320 | 295 |
| d₁₀ de taille de cellules (µm) | 305 | 290 | 280 |
| d₉₀ de taille de cellules (µm) | 360 | 350 | 310 |
| d₁₀₀, ou taille maximale de taille de cellule (µm) | 900 | 850 | 800 |
| R = (d₉₀ - d₁₀) /d₅₀ de taille de cellule | 0,16 | 0,19 | 0,10 |

| **Propriétés mesurées** | | | |
|---|---|---|---|
| Perte de charge (exemple 1 = référence 100) | 100 | 79 | **94** |
| Efficacité de filtration en % | 99,8 | **<99,0** | >99,5 |
| Résistance mécanique (exemple 1 = référence 100) | 100 | 69,8 | 72,7 |

Les résultats indiquent que l'exemple 2 présente une efficacité de filtration inacceptable (<99,0). L'exemple 3 présente une perte de charge significativement plus faible que l'exemple 1 comparatif (de manière remarquable, la perte de charge devient inférieure à 95, ce qui est particulièrement avantageux), tout en présentant une résistance mécanique acceptable (bien que la résistance mécanique soit inférieure pour l'exemple 3, elle reste satisfaisante dans une application de filtration).

De manière surprenante, et sans pouvoir l'expliquer de manière théorique, les excellentes performances de l'exemple 3 sont associées à une distribution de la taille des cellules étroite, qui se traduit par un rapport (d₉₀-d₁₀) /d₅₀ faible, inférieur à 0,15.

Les mousses céramiques frittées selon l'invention offrent ainsi à la fois une efficacité de filtration remarquable, mais aussi une perte de charge très faible. Ce compromis permet de limiter l'énergie nécessaire pour faire circuler l'air à travers la mousse céramique. Il permet aussi d'utiliser la mousse céramique dans des applications où la circulation d'air résulte d'une simple inhalation, par exemple dans un masque respiratoire individuel.

Comme cela apparaît clairement à présent, l'invention permet d'optimiser la filtration, et en particulier le traitement d'air, en particulier l'air des espaces clos habitables comme les habitations, les bureaux et les habitacles de véhicules.

Notamment, une mousse céramique selon l'invention permet à la fois la filtration de particules de manière efficace et avec une perte de charge faible, l'inactivation d'agents pathogènes et l'élimination des substances organiques polluantes. La mousse céramique mise en œuvre est avantageusement réutilisable, voire impérissable, et recyclable.

Bien entendu, l'invention n'est cependant pas limitée aux modes de réalisation décrits, fournis à des fins illustratives uniquement.

## Revendications

1. Procédé de fabrication d'une mousse céramique frittée suivant les étapes successives suivantes :
a) préparation d'un mélange M contenant au moins une poudre céramique en suspension dans de l'eau, au moins un agent gélifiant et au moins un agent moussant, à une température de mélange supérieure à la température de gélification dudit agent gélifiant,
b) cisaillement dudit mélange M , dans un malaxeur mousseur (10) équipé d'au moins une pale (14) montée à rotation autour d'un axe (X) et perforée par une pluralité de perforations (22) traversant ladite pale suivant l'épaisseur de ladite pale et débouchant par des ouvertures sur une face de ladite pale, ledit cisaillement étant à une température de moussage supérieure à ladite température de gélification, jusqu'à obtention d'une mousse intermédiaire,
c) gélification de ladite mousse intermédiaire par refroidissement de ladite mousse intermédiaire à une température au moins deux fois plus faible que la température de gélification de l'agent gélifiant, en °C,
d) séchage de ladite mousse gélifiée de manière à obtenir une préforme dont l'humidité après séchage est de préférence inférieure à 1%,
e) cuisson de ladite préforme à une température supérieure à 1300°C et inférieure à 2300°C,
procédé dans lequel
- la concentration surfacique en dites ouvertures mesurée dans une fraction radiale d'extrémité (F₁) s'étendant, à partir d'une extrémité libre de la pale opposée à l'axe de rotation (X) de la pale, sur 30% de la largeur de ladite face,
étant supérieure à
- la concentration surfacique en dites ouvertures mesurée dans une fraction radiale centrale (F₁') s'étendant, à partir de l'axe de rotation (X) de la pale, sur 30% de la largeur de ladite face,
la largeur étant mesurée perpendiculairement à l'axe de rotation,

2. Procédé de fabrication selon la revendication précédente, dans lequel le rapport desdites concentrations surfaciques est supérieur à 1,5.

3. Procédé de fabrication selon la revendication précédente, dans lequel le rapport desdites concentrations surfaciques est supérieur à 5, de préférence supérieur à 10.

4. Procédé de fabrication selon l'une quelconque des revendications précédentes, dans lequel lesdites ouvertures sont régulièrement réparties dans au moins une zone perforée (26) et/ou présentent chacune un diamètre équivalent compris 2 et 20 mm et/ou ont une surface cumulée supérieure à 10%, et de préférence inférieure à 80% de la surface de ladite face.

5. Procédé de fabrication selon l'une quelconque des revendications précédentes, dans lequel ledit malaxeur mousseur comporte un ensemble de dites pales perforées équiangulairement régulièrement réparties autour de l'axe de rotation (X) sensiblement planes et présentant une épaisseur inférieure à 10 mm.

6. Mousse céramique obtenue ou susceptible d'avoir été obtenue par un procédé selon l'une quelconque des revendications précédentes, ladite mousse céramique présentant une pluralité de cellules imbriquées, délimitées par des parois céramiques et connectées entre elles par des fenêtres d'interconnexion, les parois délimitant les cellules étant formées par frittage de grains, cette agglomération laissant subsister des interstices entre les grains,
la mousse céramique présentant une porosité totale supérieure à 40%, la porosité totale, en pourcentage, étant égale à 100 x (1 - le rapport de la densité géométrique divisée par la densité absolue), la densité géométrique, exprimée en g/cm³, étant mesurée suivant la norme ISO 5016:1997, la densité absolue, exprimée en g/cm³, étant mesurée en divisant la masse d'un échantillon de la mousse céramique par le volume de cet échantillon broyé de manière à supprimer la porosité ;
le rapport (d₉₀-d₁₀)/d₅₀ étant inférieur à 0,15,
les percentiles d₁₀, d₅₀ et d₉₀ étant les tailles de cellule correspondant respectivement aux pourcentages de 10%, 50%, 90% , en nombre, respectivement, sur la courbe de distribution cumulée des tailles de cellule classées par ordre croissant,
la taille d'une cellule étant le diamètre équivalent de son aire représentée sur une photo numérique d'une coupe de la mousse mesurée selon la description.

7. Mousse céramique selon la revendication immédiatement précédente, dans laquelle le percentile d₁₀ est supérieur à 240 micromètres, et/ou le percentile d₉₀ est inférieur à 350 micromètres et/ou le percentile d₅₀ est compris entre 250 et 340 micromètres et/ou la taille maximale des cellules, ou percentile d₁₀₀, est inférieure ou égale à 850 micromètres.

8. Mousse céramique selon l'une quelconque des revendications 6 à 7, dans laquelle porosité totale de la mousse est supérieure à 80%.

9. Mousse céramique selon l'une quelconque des revendications 6 à 8, constituée, pour plus de 95% de sa masse, en un matériau céramique.

10. Mousse céramique selon la revendication immédiatement précédente, dans laquelle le matériau céramique est choisi parmi le carbure de silicium, la cordiérite, le titanate d'aluminium, la zircone, l'alumine, la mullite, la silice, et les mélanges de ces matériaux.

11. Mousse céramique selon la revendication immédiatement précédente, dans laquelle le matériau céramique est du carbure de silicium recristallisé.

12. Mousse céramique selon l'une quelconque des revendications 6 à 11, présentant une distribution de la taille des pores, mesurée avec un porosimètre au mercure, qui est bimodale et qui comporte des premier et deuxièmes pics principaux centrés sur des première et deuxième tailles de pore comprises entre 4 µm et 30 µm et entre 40 µm et 180 µm, respectivement, la porosité intergranulaire, représentée par le premier pic, étant supérieure ou égale à 5 % et inférieure à 25%.

13. Dispositif choisi parmi un support de catalyseur, un filtre pour la filtration de liquides ou de gaz à une température supérieure à 200°C, un diffuseur d'un brûleur à gaz, un récepteur volumétrique solaire, une pièce de gazetterie, par exemple un support de déliantage, et un dit appareil de traitement de gaz, ledit dispositif comportant une mousse céramique selon l'une quelconque des revendications 6 à 12.

14. Dispositif selon la revendication précédente, dans lequel ladite mousse présente des faces amont et aval par lesquelles, dans une position de service du dispositif, un liquide entre et sort de ladite mousse, le rapport de l'épaisseur moyenne mesurée entre lesdites faces amont et aval divisé par la surface moyenne desdites faces amont et aval étant supérieur à 0,2 mm/100 cm².

## Patentansprüche

1. Verfahren zur Herstellung eines gesinterten keramischen Schaums nach den folgenden aufeinander folgenden Schritten:
a) Zubereiten einer Mischung M, die mindestens ein in Wasser suspendiertes keramisches Pulver, mindestens einen Gelbildner und mindestens einen Schaumbildner enthält, bei einer Mischtemperatur über der Gelbildungstemperatur des Gelbildners,
b) Scheren der Mischung M in einem Aufschäummischer (10), der mit mindestens einem Schaufelblatt (14) ausgestattet ist, das um eine Achse (X) drehend gelagert ist und mit einer Vielzahl von Perforationen (22) perforiert ist, die das Schaufelblatt entlang der Dicke des Schaufelblatts durchdringen und mit Öffnungen auf einer Seite des Schaufelblatts münden, wobei das Scheren bei einer Aufschäumtemperatur über der Gelbildungstemperatur bis zum Erhalten eines Zwischenschaums erfolgt,
c) Gelieren des Zwischenschaums durch Kühlen des Zwischenschaums auf eine Temperatur, die mindestens zwei Mal geringer als die Gelbildungstemperatur des Gelbildners, in °C, ist,
d) Trocknen des gelierten Schaums, so dass ein Vorformling erhalten wird, dessen Feuchte nach dem Trocknen bevorzugt weniger als 1 % beträgt,
e) Brennen des Vorformlings bei einer Temperatur über 1300 °C und unter 2300 °C,
wobei bei dem Verfahren
- die flächenbezogene Konzentration der Öffnungen, gemessen in einer radialen Endfraktion (F₁), die sich von einem zu der Rotationsachse (X) des Schaufelblatts entgegengesetzten freien Ende des Schaufelblatts aus über 30 % der Breite der Seite erstreckt,
größer ist als
- die flächenbezogene Konzentration der Öffnungen, gemessen in einer radialen zentralen Fraktion (F₁'), die sich von der Rotationsachse (X) des Schaufelblatts aus über 30 % der Breite der Seite erstreckt,
wobei die Breite senkrecht zu der Rotationsachse gemessen wird.

2. Verfahren zur Herstellung nach dem vorhergehenden Anspruch, wobei das Verhältnis der flächenbezogenen Konzentrationen größer als 1,5 ist.

3. Verfahren zur Herstellung nach dem vorhergehenden Anspruch, wobei das Verhältnis der flächenbezogenen Konzentrationen größer als 5, bevorzugt größer als 10 ist.

4. Verfahren zur Herstellung nach einem der vorhergehenden Ansprüche, wobei die Öffnungen regelmäßig in mindestens einem perforierten Bereich (26) verteilt sind und/oder jeweils einen äquivalenten Durchmesser zwischen 2 und 20 mm und/oder eine kumulierte Fläche von mehr als 10 % und bevorzugt weniger als 80 % der Fläche der Seite aufweisen.

5. Verfahren zur Herstellung nach einem der vorhergehenden Ansprüche, wobei der Aufschäummischer eine Anordnung aus gleichwinklig regelmäßig um die Rotationsachse (X) verteilten perforierten Schaufelblättern umfasst, die im Wesentlichen plan sind und eine Dicke von weniger als 10 mm aufweisen.

6. Keramischer Schaum, der mit einem Verfahren nach einem der vorhergehenden Ansprüche erhalten wird oder erhalten worden sein kann, wobei der keramische Schaum eine Vielzahl von verschachtelten Zellen aufweist, die durch keramische Wände begrenzt werden und untereinander durch Verbindungsfenster verbunden sind, wobei die die Zellen begrenzenden Wände durch Sintern von Körnern gebildet werden, wobei diese Agglomeration Zwischenräume zwischen den Körnern fortbestehen lässt,
wobei der keramische Schaum eine Gesamtporosität von mehr als 40 % aufweist, wobei die Gesamtporosität, in Prozent, gleich 100 x (1 - das Verhältnis der geometrischen Dichte dividiert durch die absolute Dichte) ist, wobei die geometrische Dichte, ausgedrückt in g/cm³, nach der Norm ISO 5016:1997 gemessen wird, wobei die absolute Dichte, ausgedrückt in g/cm³, gemessen wird, indem die Masse einer Probe des keramischen Schaums durch das Volumen dieser zum Beseitigen der Porosität zermahlenen Probe dividiert wird;
wobei das Verhältnis (d₉₀-d₁₀) /d₅₀ kleiner als 0,15 ist, wobei die Perzentile d₁₀, d₅₀ und d₉₀ die Zellengrößen sind, die zahlenmäßig den Prozentsätzen 10 %, 50 % beziehungsweise 90 % auf der Verteilungssummenkurve der in aufsteigender Reihenfolge geordneten Zellengrößen entsprechen,
wobei die Größe einer Zelle der äquivalente Durchmesser ihres auf einem digitalen Foto eines Schnitts des Schaums dargestellten und gemäß der Beschreibung gemessenen Flächeninhalts ist.

7. Keramischer Schaum nach dem unmittelbar vorhergehenden Anspruch, wobei das Perzentil d₁₀ größer als 240 Mikrometer ist und/oder das Perzentil d₉₀ kleiner als 350 Mikrometer ist und/oder das Perzentil d₅₀ zwischen 250 und 340 Mikrometern liegt und/oder die maximale Größe der Zellen, oder das Perzentil d₁₀₀, kleiner oder gleich 850 Mikrometer ist.

8. Keramischer Schaum nach einem der Ansprüche 6 bis 7, wobei die Gesamtporosität des Schaums mehr als 80 % beträgt.

9. Keramischer Schaum nach einem der Ansprüche 6 bis 8, der zu mehr als 95 % seiner Masse aus einem keramischen Material besteht.

10. Keramischer Schaum nach dem unmittelbar vorhergehenden Anspruch, wobei das keramische Material aus Siliciumcarbid, Cordierit, Aluminiumtitanat, Zirkon, Aluminiumoxid, Mullit, Siliciumdioxid und den Mischungen dieser Materialien gewählt ist.

11. Keramischer Schaum nach dem unmittelbar vorhergehenden Anspruch, wobei das keramische Material rekristallisiertes Siliciumcarbid ist.

12. Keramischer Schaum nach einem der Ansprüche 6 bis 11, der eine mit einem Quecksilberporosimeter gemessene Porengrößenverteilung aufweist, die bimodal ist und die erste und zweite Haupt-Peaks aufweist, die auf erste und zweite Porengrößen zwischen 4 µm und 30 µm beziehungsweise zwischen 40 µm und 180 µm zentriert sind, wobei die durch den ersten Peak dargestellte intergranulare Porosität größer oder gleich 5 % oder kleiner als 25 % ist.

13. Vorrichtung, die aus einem Katalysatorträger, einem Filter zum Filtern von Flüssigkeiten oder Gasen bei einer Temperatur über 200 °C, einem Diffusor eines Gasbrenners, einem volumetrischen Solarreceiver, einem Brennhilfsmittel, zum Beispiel einem Entbinderungsträger, und einem Gasbehandlungsgerät gewählt ist, wobei die Vorrichtung einen keramischen Schaum nach einem der Ansprüche 6 bis 12 umfasst.

14. Vorrichtung nach dem vorhergehenden Anspruch, wobei der Schaum stromaufwärtige und stromabwärtige Seiten aufweist, durch die in einer Betriebsposition der Vorrichtung eine Flüssigkeit eintritt und aus dem Schaum austritt, wobei das Verhältnis der zwischen den stromaufwärtigen und stromabwärtigen Seiten gemessenen mittleren Dicke, dividiert durch die mittlere Fläche der stromaufwärtigen und stromabwärtigen Seiten, größer als 0,2 mm/100 cm² ist.

## Claims

1. Method for manufacturing a sintered ceramic foam by following the following successive steps:
a) preparing a mixture M containing at least one ceramic powder in suspension in water, at least one gelling agent and at least one foaming agent, at a mixing temperature higher than the gelling temperature of said gelling agent,
b) shearing said mixture M, in a foaming mixer (10) equipped with at least one blade (14) mounted to rotate about an axis (X) and perforated by a plurality of perforations (22) passing through said blade in the direction of the thickness of said blade and opening via openings onto one face of said blade, said shearing being at a foaming temperature higher than said gelling temperature, until an intermediate foam is obtained,
c) gelling said intermediate foam by cooling said intermediate foam to a temperature at least a factor of two lower than the gelling temperature of the gelling agent, in °C,
d) drying said gelled foam so as to obtain a preform whose moisture content after drying is preferably less than 1%,
e) firing said preform at a temperature higher than 1300°C and lower than 2300°C,
in which method
- the surface concentration of said openings measured in a radial end fraction (F₁) extending, from a free end of the blade at the opposite end from the axis of rotation (X) of the blade, over 30% of the width of said face,
being greater than
- the surface concentration of said openings measured in a central radial fraction (F₁') extending, from the axis of rotation (X) of the blade, over 30% of the width of said face,
the width being measured perpendicular to the axis of rotation.

2. Manufacturing method according to the preceding claim, wherein the ratio of said surface concentrations is greater than 1.5.

3. Manufacturing method according to the preceding claim, wherein the ratio of said surface concentrations is greater than 5, preferably greater than 10.

4. Manufacturing method according to any one of the preceding claims, wherein said openings are regularly distributed in at least one perforated zone (26) and/or each have an equivalent diameter of between 2 and 20 mm and/or have a cumulative surface area greater than 10%, and preferably less than 80% of the surface area of said face.

5. Manufacturing method according to any one of the preceding claims, wherein said foaming mixer comprises a set of said perforated blades uniformly equiangularly distributed about the axis of rotation (X), these blades being substantially planar and having a thickness of less than 10 mm.

6. Ceramic foam obtained or obtainable by a method according to any one of the preceding claims, said ceramic foam having a plurality of imbricated cells delimited by ceramic walls and connected to each other by interconnection windows, the walls delimiting the cells being formed by grain sintering, this agglomeration leaving gaps between the grains,
the ceramic foam having a total porosity greater than 40%, the total porosity, as a percentage, being equal to 100 x (1 - the ratio of geometric density divided by absolute density), the geometric density, expressed in g/cm³, being measured in accordance with ISO 5016:1997, the absolute density, expressed in g/cm³, being measured by dividing the mass of a sample of the ceramic foam by the volume of that sample ground so as to eliminate the porosity;
the ratio (d₉₀-d₁₀) /d₅₀ being less than 0.15,
the percentiles d₁₀, d₅₀ and d₉₀ being the cell sizes corresponding, respectively, to the percentages of 10%, 50%, 90%, by number, respectively, on the cumulative distribution curve for cell sizes ranked in ascending order,
the size of a cell being the equivalent diameter of its surface area represented on a digital photo of a cross section through the foam, measured according to the description.

7. Ceramic foam according to the immediately preceding claim, wherein the percentile d₁₀ is greater than 240 micrometres, and/or the percentile d₉₀ is less than 350 micrometres and/or the percentile d₅₀ is comprised between 250 and 340 micrometres and/or the maximum cell size, or percentile d₁₀₀, is less than or equal to 850 micrometres.

8. Ceramic foam according to either one of Claims 6 or 7, wherein the total porosity of the foam is greater than 80%.

9. Ceramic foam according to any one of Claims 6 to 8 consisting, to an extent of more than 95% by weight, of a ceramic material.

10. Ceramic foam according to the immediately preceding claim, wherein the ceramic material is selected from silicon carbide, cordierite, aluminium titanate, zirconia, alumina, mullite, silica, and mixtures of these materials.

11. Ceramic foam according to the immediately preceding claim, wherein the ceramic material is recrystallized silicon carbide.

12. Ceramic foam according to any one of Claims 6 to 11 having a pore size distribution, measured with a mercury porosimeter, which is bimodal and has first and second principal peaks centred on first and second pore sizes of between 4 µm and 30 µm and between 40 µm and 180 µm, respectively, the intergranular porosity, represented by the first peak, being greater than or equal to 5% and less than 25%.

13. Device selected from a catalyst support, a filter for filtering liquids or gases at a temperature higher than 200°C, a diffuser of a gas burner, a solar volumetric receiver, a gas-generation item, for example a debinding support, and a said gas treatment apparatus, said device comprising a ceramic foam according to any one of Claims 6 to 12.

14. Device according to the preceding claim, wherein said foam has upstream and downstream faces through which, when the device is in a position of use, a liquid enters and exits said foam, the ratio of the mean thickness measured between said upstream and downstream faces divided by the mean area of said upstream and downstream faces being greater than 0.2 mm/100 cm².
